(19) Europäisches Patentamt
European Patent Office
Office européen des brevets

(11) **EP 4 286 447 A1**

(12) **EUROPEAN PATENT APPLICATION**

(43) Date of publication:
**06.12.2023 Bulletin 2023/49**

(21) Application number: **23174827.8**

(22) Date of filing: **23.05.2023**

(51) International Patent Classification (IPC):
***C08G 63/183*** (2006.01)     ***C08G 63/78*** (2006.01)
***C08J 5/18*** (2006.01)     ***C08L 67/02*** (2006.01)
***C08G 63/16*** (2006.01)

(52) Cooperative Patent Classification (CPC):
(C-Sets available)
**C08G 63/183; C08G 63/16; C08G 63/78;
C08J 5/18;** C08J 2367/02     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 KR 20220066726**

(71) Applicant: **Ecovance Co. Ltd
Suwon-si, Gyeonggi-do 16338 (KR)**

(72) Inventors:
• **KIM, Kyung Youn
16338 Gyeonggi-do (KR)**
• **KIM, Seong Dong
16338 Gyeonggi-do (KR)**
• **KIM, Hoon
16338 Gyeonggi-do (KR)**

(74) Representative: **Dehns
St. Bride's House
10 Salisbury Square
London EC4Y 8JD (GB)**

(54) **BIODEGRADABLE POLYESTER RESIN, PREPARATION METHOD THEREOF, AND BIODEGRADABLE POLYESTER FILM COMPRISING SAME**

(57) The embodiments relate to a biodegradable polyester resin, to a process for preparing the same, and to a biodegradable polyester film comprising the same. As the biodegradable polyester resin has a polydispersity index (PDI) and a weight reduction rate satisfying specific ranges, all of the biodegradability, mechanical properties such as tensile strength and impact strength, and thermal resistance can be enhanced. In addition, when the biodegradable polyester resin is used to prepare a film, it is possible to prevent the incident of defects such as fumes, bubbles, and fisheyes, thereby enhancing processability and productivity. Accordingly, the biodegradable polyester resin according to the embodiment can be applied to various fields that require thermal resistance and moldability, such as medical devices or containers, disposable food containers, and the like, so that they would exhibit excellent characteristics.

EP 4 286 447 A1

(52) Cooperative Patent Classification (CPC): (Cont.)

C-Sets
**C08L 67/02, C08L 1/02**

**Description**

**Technical Field**

Embodiments relate to a biodegradable polyester resin, to a process for preparing the same, and to a biodegradable polyester film comprising the same.

**Background Art**

In recent years, as concerns about environmental issues have increased, there is a need for a solution to the problem of dealing with various household products, in particular, disposable products. Specifically, although polymer materials, which are inexpensive and have excellent processability, are widely used to manufacture various products such as films, fibers, packaging materials, bottles, and containers, when the lifespan of these products is over, harmful substances are discharged when they are incinerated, and it takes hundreds of years depending on their types to completely decompose naturally.
In order to overcome the limitations of these polymers, studies on biodegradable polymers that can be decomposed in a much faster time are being actively conducted. Although polylactic acid (PLA), polybutyleneadipate terephthalate (PBAT), polybutylene succinate (PBS), polyhydroxy alkanoate (PHA), polycaprolactone (PCL), and the like are used as biodegradable polymers, they have low mechanical properties such as tensile strength and impact strength, low melting point, and poor thermal resistance, as compared with non-degradable resins such as polyethylene terephthalate (PET), polyethylene (PE), and polypropylene (PP); thus, it is difficult to operate the process, and the productivity is low. Accordingly, there is a demand for research on biodegradable polymers that have excellent thermal stability, without deteriorating biodegradability and mechanical properties, thereby enhancing processability and productivity.
As an example, Korean Laid-open Patent Publication No. 2012-0103158 discloses a biodegradable plastic composition having improved durability in which polypropylene carbonate (PPC) is blended with a composition comprising PLA, PBS, or the like. However, the method based on such blending has limitations in enhancing durability, thermal resistance, or the like.

[Prior Art Document]

[Patent Document]

(Patent Document 1) Korean Laid-open Patent Publication No. 2012-0103158

**Disclosure of Invention**

**Technical Problem**

Accordingly, the embodiments aim to provide a biodegradable polyester resin that is excellent in all of the biodegradability, mechanical properties such as tensile strength and impact strength, and thermal stability, and is capable of enhancing processability and productivity, a process for preparing the same, and a biodegradable polyester film comprising the same.

**Solution to Problem**

The biodegradable polyester resin according to an embodiment of the present invention comprises a first repeat unit comprising a first diol residue and an aromatic dicarboxylic acid residue; and a second repeat unit comprising a second diol residue and an aliphatic dicarboxylic acid residue, wherein the polydispersity index (PDI) is less than 2.0, and, when the weight reduction rate (%) at a specific temperature (T°C) condition according to the following Equation 1 is referred to as $\Delta W_T$, $\Delta W_{220}$ is 1.3% or less.

$$[\text{Equation 1}]$$

$$\text{Weight reduction rate } (\Delta W_T) = \frac{W - W_T}{W} \times 100$$

in Equation 1, W is the weight (mg) of the biodegradable polyester resin whose moisture content is adjusted to 100 ppm, and $W_T$ is the weight (mg) measured by a thermogravimetric analyzer after the biodegradable polyester resin whose moisture content has been adjusted is kept at T°C for 60 minutes.

The process for preparing a biodegradable polyester resin according to another embodiment comprises pretreating a mixture of a diol and a dicarboxylic acid to prepare a slurry; subjecting the slurry to an esterification reaction to prepare a prepolymer; and subjecting the prepolymer to a polycondensation reaction to prepare a polymer, wherein the biodegradable polyester resin comprises a first repeat unit comprising a first diol residue and an aromatic dicarboxylic acid residue; and a second repeat unit comprising a second diol residue and an aliphatic dicarboxylic acid residue, the polydispersity index (PDI) of the biodegradable polyester resin is less than 2.0, and, when the weight reduction rate (%) at a specific temperature (T°C) condition according to the above Equation 1 is referred to as $\Delta W_T$, $\Delta W_{220}$ of the biodegradable polyester resin is 1.3% or less.

The biodegradable polyester film according to another embodiment of the present invention comprises a biodegradable polyester resin, wherein the biodegradable polyester resin comprises a first repeat unit comprising a first diol residue and an aromatic dicarboxylic acid residue; and a second repeat unit comprising a second diol residue and an aliphatic dicarboxylic acid residue, the polydispersity index (PDI) of the biodegradable polyester resin is less than 2.0, and, when the weight reduction rate (%) at a specific temperature (T°C) condition according to the above Equation 1 is referred to as $\Delta W_T$, $\Delta W_{220}$ of the biodegradable polyester resin is 1.3% or less.

**Advantageous Effects of Invention**

As the biodegradable polyester resin according to the embodiment has a polydispersity index (PDI) of less than 2.0, and the weight reduction rate ($\Delta W_{220}$) according to Equation 1 satisfies 1.3% or less, all of the biodegradability, mechanical properties such as tensile strength and impact strength, and thermal resistance can be enhanced.

In addition, when the biodegradable polyester resin is used to prepare a film, it is possible to prevent the incident of defects such as fumes, bubbles, and fisheyes, thereby enhancing processability and productivity.

Further, the biodegradable polyester resin can be applied to various fields that require thermal resistance and moldability, such as medical devices or containers, disposable food containers, and the like, so that they would exhibit excellent characteristics.

**Best Mode for Carrying out the Invention**

Hereinafter, the present invention will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

Polylactic acid (PLA), polybutyleneadipate terephthalate (PBAT), polybutylene succinate (PBS), polyhydroxy alkanoate (PHA), polycaprolactone (PCL), and the like used as biodegradable polymers have low mechanical properties such as tensile strength and impact strength, low melting point, and poor thermal resistance, as compared with non-degradable resins such as polyethylene terephthalate (PET), polyethylene (PE), and polypropylene (PP); thus, it is difficult to operate the process, and the productivity is low.

Specifically, in order to manufacture a molded article such as films from a resin, a compounding step, an extrusion and stretching step, an extrusion and blowing step, an injection step, and the like are carried out. However, if heat of 180°C or higher is applied to biodegradable resins in such a manufacturing process, the polymer is likely to be degraded. As a result, oligomers vaporize to generate fumes, or oligomers precipitate in a white color, which may lower the quality and reduce the mechanical properties such as tensile strength or impact strength.

In particular, a twin screw is commonly used in a compounding step to enhance kneading, in which the shear stress between the screw elements and the biodegradable resin may accelerate the thermal decomposition of the resin. Thus, the change in intrinsic viscosity (IV drop), which is the absolute value of the difference between the intrinsic viscosity of the resin and the intrinsic viscosity of a film produced therefrom, increases, the generation of fumes may be maximized, and yellowing or browning may take place.

In addition, oligomers may accumulate on the casting drum and scatter in an extrusion and stretching step, which may cause disconnection in the electrostatic application method, leading to discontinuance of the production. Degraded polymers may be formed into air bubbles or bubbles, which may deteriorate quality and productivity. Oligomers may act as a defect in the formation of a bubble during an extrusion and blowing step, thereby causing the bubble to burst, resulting in low bubble stability. In addition, in an injection step, oligomers may cause fisheyes in an injection molded article or fusion between the surfaces of films.

The biodegradable polyester resin according to an embodiment comprises a first repeat unit comprising a first diol residue and an aromatic dicarboxylic acid residue; and a second repeat unit comprising a second diol residue and an aliphatic dicarboxylic acid residue, wherein the polydispersity index (PDI) is less than 2.0, and the weight reduction rate ($\Delta W_{220}$) according to Equation 1 is 1.3% or less, whereby all of the biodegradability, mechanical properties such as tensile strength and impact strength, and thermal resistance can be enhanced. In addition, when the biodegradable polyester resin is used to prepare a film, it is possible to prevent the incident of defects such as fumes, bubbles, and fisheyes, thereby enhancing processability and productivity, and films of excellent quality can be provided.

Specifically, the biodegradable polyester resin according to an embodiment is excellent in all of the mechanical properties such as tensile strength and impact strength and thermal resistance while biodegradability is not deteriorated. Thus, even if reinforced mixing is carried out using a twin screw in a compounding step, the change in intrinsic viscosity (IV drop), which is the absolute value of the difference between the intrinsic viscosity of the resin and the intrinsic viscosity of a film produced therefrom, is low, fumes are hardly generated, and yellowing or browning hardly takes place. In addition, even if a very small amount of an electrostatic agent is added in an extrusion and stretching step, disconnection does not take place. A Bubble is formed well in a blowing step, along with high bubble stability. Fisheyes or fusion between the film surfaces hardly takes place.

## Biodegradable polyester resin

The biodegradable polyester resin according to an embodiment of the present invention comprises a first repeat unit comprising a first diol residue and an aromatic dicarboxylic acid residue; and a second repeat unit comprising a second diol residue and an aliphatic dicarboxylic acid residue, wherein the polydispersity index (PDI) is less than 2.0, and, when the weight reduction rate (%) at a specific temperature ($T°C$) condition according to the following Equation 1 is referred to as $\Delta W_T$, $\Delta W_{220}$ is 1.3% or less.

$$[\text{Equation 1}]$$

$$\text{Weight reduction rate } (\Delta W_T) = \frac{W - W_T}{W} \times 100$$

in Equation 1, W is the weight (mg) of the biodegradable polyester resin whose moisture content is adjusted to 100 ppm, and $W_T$ is the weight (mg) measured by a thermogravimetric analyzer after the biodegradable polyester resin whose moisture content has been adjusted is kept at $T°C$ for 60 minutes.

According to an embodiment, the biodegradable polyester resin comprises a diol residue, an aromatic dicarboxylic acid residue, and an aliphatic dicarboxylic acid residue.

Specifically, the diol residue may comprise a first diol residue and a second residue, each of which comprises a residue of 1,4-butanediol, 1,2-ethanediol, 1,3-propanediol, or a derivative thereof. In addition, the biodegradable polyester resin may comprise a first repeat unit comprising a first diol residue and an aromatic dicarboxylic acid residue and a second repeat unit comprising a second diol residue and an aliphatic dicarboxylic acid residue. As the biodegradable polyester resin comprises the first repeat unit and the second repeat unit, it is possible to enhance biodegradability and mechanical properties.

The diol residue may be a first diol residue and a second diol residue, each of which may comprise a residue of 1,4-butanediol, 1,2-ethanediol, 1,3-propanediol, or a derivative thereof. The first diol residue and second diol residue may be the same as, or different from, each other. Specifically, the diol residue may comprise a residue of 1,4-butanediol, 1,2-ethanediol, or a derivative thereof. More specifically, it may comprise 1,4-butanediol or a derivative thereof. If the diol residue comprises 1,4-butanediol or a derivative thereof, it may be more advantageous for enhancing biodegradability, mechanical properties such as tensile strength, and thermal resistance.

In addition, the aromatic dicarboxylic acid residue may comprise a residue of terephthalic acid, dimethyl terephthalate, or a derivative thereof, and the aliphatic dicarboxylic acid residue may comprise a residue of adipic acid, succinic acid, sebacic acid, or a derivative thereof.

According to an embodiment, the aromatic dicarboxylic acid may comprise terephthalic acid. Specifically, the terephthalic acid may have an average particle diameter (D50) of 10 $\mu$m to 400 $\mu$m in a particle size distribution (PSD) measured with a particle size analyzer Microtrac S3500 and a standard deviation of the average particle diameter (D50) of 100 or less.

Specifically, in the case where the aromatic dicarboxylic acid comprises terephthalic acid, terephthalic acid is a white crystal that has perfect crystallinity and sublimes at around 300°C under normal pressure without a melting point, and it has very low solubility in the diol, making it difficult to carry out a homogeneous reaction. As the aromatic dicarboxylic acid according to an embodiment comprises terephthalic acid having an average particle diameter and a standard deviation thereof within the above ranges, it is possible to further enhance crystallinity and thermal stability.

For example, the average particle diameter (D50) of terephthalic acid may be 15 μm to 400 μm, 20 μm to 250 μm, 35 μm to 215 μm, 40 μm to 180 μm, 50 μm to 165 μm, 75 μm to 150 μm, or 90 μm to 135 μm.

In addition, the standard deviation of the average particle diameter (D50) of terephthalic acid may be 90 or less, 80 or less, 65 or less, 50 or less, or 30 or less, or 5 to 90, 5 to 70, 10 to 60, 12 to 45, 15 to 40, or 15 to 30.

As the average particle diameter of terephthalic acid and the standard deviation thereof each satisfy the above ranges, it is possible to enhance the solubility in a diol, and it may be more advantageous from the viewpoint of esterification reaction rate in a subsequent process. Specifically, as the average particle diameter of terephthalic acid and the standard deviation thereof each satisfy the above ranges, the reaction time can be shortened by 1.5 times or more, without deteriorating physical properties, so that it may be more preferable in terms of reaction efficiency.

In addition, if the average particle diameter (D50) of terephthalic acid is less than 10 μm, the average particle diameter (D50) is too small, so that the primary particles may be undesirably converted to aggregated secondary particles. If the average particle diameter (D50) of terephthalic acid exceeds 400 μm, the average particle diameter (D50) is too large, so that the solubility in diols is reduced, thereby lowering the esterification reaction rate, and it may be difficult to achieve a homogenization reaction.

According to another embodiment, the aromatic dicarboxylic acid may comprise dimethyl terephthalate. Specifically, dimethyl terephthalate may be in a molten state, or it, when measured in a particle state, may have an average particle diameter (D50) and a standard deviation thereof similar to those of terephthalic acid.

According to another embodiment, the aliphatic dicarboxylic acid may comprise adipic acid. Specifically, adipic acid may have an average particle diameter (D50) of 50 μm to 500 μm in a particle size distribution (PSD) measured with a particle size analyzer Microtrac S3500 and a standard deviation of the average particle diameter (D50) of 100 or less.

For example, the average particle diameter (D50) of adipic acid may be 60 μm to 480 μm, 80 μm to 460 μm, 120 μm to 450 μm, 180 μm to 420 μm, 200 μm to 390 μm, 220 μm to 360 μm, 235 μm to 350 μm, or 260 μm to 330 μm.

In addition, the standard deviation of the average particle diameter (D50) of adipic acid may be 90 or less, 70 or less, 55 or less, 40 or less, or 30 or less, or 5 to 90, 5 to 65, 10 to 60, 12 to 45, 15 to 40, or 16 to 30.

As the average particle diameter of adipic acid and the standard deviation thereof each satisfy the above ranges, it is possible to further enhance dispersibility, and it may be more advantageous from the viewpoint of esterification reaction rate in a subsequent process. Specifically, as the average particle diameter of adipic acid and the standard deviation thereof each satisfy the above ranges, the reaction time can be shortened by 1.5 times or more, without deteriorating physical properties, so that it may be more preferable in terms of reaction efficiency.

Specifically, the first repeat unit may comprise a residue of 1,4-butanediol or a derivative thereof and a residue of terephthalic acid or a derivative thereof. Alternatively, the first repeat unit may comprise a residue of 1,4-butanediol or a derivative thereof and a residue of dimethyl terephthalate or a derivative thereof.

In addition, the second repeat unit may comprise a residue of 1,4-butanediol or a derivative thereof and a residue of adipic acid or a derivative thereof. Alternatively, the second repeat unit may comprise a residue of 1,4-butanediol or a derivative thereof and a residue of succinic acid or a derivative thereof.

As the first repeat unit and the second repeat unit satisfy the above configuration, it is possible to further enhance biodegradability, mechanical properties such as tensile strength, and thermal resistance.

Specifically, in order for the biodegradable polyester resin according to an embodiment to have excellent biodegradability, along with enhanced mechanical properties, dimensional stability, moldability, and productivity, it is very important to control the numbers of the first repeat unit and the second repeat unit constituting the biodegradable polyester resin.

In general, polyester resins, such as polybutyleneadipate terephthalate (PBAT)-based resins, have excellent flexibility. On the other hand, they have poor impact resistance, which may easily cause tearing or bursting, and they have weak stiffness, whereby their use is limited. However, as the numbers of the first repeat unit and the second repeat unit in the biodegradable polyester resin are controlled, it is possible to enhance all of the biodegradability, mechanical properties, dimensional stability, and productivity.

Specifically, if the number of the second repeat unit is equal to, or greater than, the number of the first repeat unit, excellent durability and thermal resistance may be maintained for a certain period of time, and biodegradability is not deteriorated, so that biodegradation can be achieved sufficiently and effectively after its use.

In addition, the number of the first repeat unit (X) may be 200 to 800, 210 to 700, 220 to 550, 225 to 500, 230 to 460, 235 to 420, 240 to 400, 245 to 360, or 245 to 320. In addition, the number of the second repeat unit (Y) may be 150 to 600, 160 to 530, 180 to 480, 190 to 460, 200 to 420, 215 to 400, 220 to 385, 235 to 350, or 240 to 315.

As the number of the first repeat unit (X) and the number of the second repeat unit (Y) each satisfy the above ranges, it is possible to enhance all of the biodegradability, mechanical properties, thermal resistance, dimensional stability, moldability, and productivity.

In particular, since the second repeat unit comprising the second diol residue and the aliphatic dicarboxylic acid residue is composed of a linear chain, it comprises an aliphatic dicarboxylic acid residue that may have an impact on adhesive properties; thus, crystallinity may be controlled according to its content, and, as the above range is satisfied, the enhancement in mechanical properties such as tensile strength and in thermal resistance can be maximized.

In addition, the ratio (X/Y) of the number of the first repeat unit (X) to the number of the second repeat unit (Y) may be 0.8 to 3.0. For example, the ratio (X/Y) of the number of the first repeat unit (X) to the number of the second repeat unit (Y) may be 0.8 to 2.9, 0.8 to 2.55, 0.83 to 2.15, 0.83 to 1.85, 0.85 to 1.6, 0.85 to 1.3, or 0.85 to 1.1.

As the ratio (X/Y) of the number of the first repeat unit (X) to the number of the second repeat unit (Y) satisfies the above range, it is possible to enhance mechanical properties such as tensile strength. In particular, when the biodegradable polyester resin is used in a blowing process, it is possible to enhance bubble stability such that the bubbles do not burst while the bubbles have a uniform shape. In addition, when the biodegradable polyester resin is used in an injection process, it is possible to effectively prevent fish eyes or fusion between the surfaces of films, thereby enhancing quality and processability.

According to an embodiment, the biodegradable polyester resin may comprise the first repeat unit and the second repeat unit in the form of a block copolymer.

Specifically, as the first repeat unit and the second repeat unit are employed in the form of a block copolymer, it is advantageous for forming microcrystals when orientation crystals are formed in a stretching process using the biodegradable polyester resin, and steric hindrance does not take place; thus, crystallization can take place sufficiently and effectively. Therefore, the biodegradable polyester resin comprising the first repeat unit and the second repeat unit in the form of a block copolymer can induce orientation crystals by stretching to form a dense crystal structure; thus, it is possible to maximize mechanical properties such as tensile strength and dimensional stability of a molded article, in particular, a film, manufactured therefrom.

In addition, the biodegradable polyester resin may comprise nanocellulose. As the biodegradable polyester resin comprises nanocellulose, biodegradability, crystallinity, thermal stability, and mechanical properties such as tensile strength, and dimensional stability can be further enhanced.

Specifically, the nanocellulose may be one or more selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose. Cellulose nanocrystals or cellulose nanofibers are preferred in terms of strength and thermal properties, but it is not limited thereto.

The nanocellulose may have an average particle size of 100 nm or more and a particle size deviation of 32% or less. For example, the average particle size of the nanocellulose may be 100 nm or more, 120 nm or more, or 140 nm or more, or 100 nm to 1,500 nm, 115 nm to 1,200 nm, 120 nm to 950 nm, 135 nm to 700 nm, or 140 nm to 550 nm. The particle size deviation of the nanocellulose may be 31% or less, 30% or less, 29.5% or less, 26% or less, 25% or less, 23% or less, or 20% or less.

The average particle size and particle size deviation of the nanocellulose may be measured with a nano particle size analyzer (e.g., Zetasizer Nano ZS). Specifically, the nanocellulose may be measured for the average particle size and particle size deviation with Zetasizer Nano ZS (manufacturer: Marven) using Zetasizer software. More specifically, the average particle size and particle size deviation may be measured through dynamic light scattering (DLS) at a temperature of 25°C and a measurement angle of 175°. Here, the value of the peak derived through the polydispersity index (PDI) in the confidence interval of 0.5 is taken as the particle size.

In addition, the biodegradable polyester resin may comprise the nanocellulose in an amount of 3,000 ppm or less. For example, the content of the nanocellulose may be 2,500 ppm or less, 2,000 ppm or less, 1,200 ppm or less, 1,000 ppm or less, 900 ppm or less, 800 ppm or less, or 650 ppm or less, or 100 ppm to 3,000 ppm, 150 ppm to 2,400 ppm, 180 ppm to 1,900 ppm, 250 ppm to 1,500 ppm, 400 ppm to 1,250 ppm, or 450 ppm to 1,000 ppm, based on the total weight of the biodegradable polyester resin.

In addition, the nanocellulose may be pretreated with bead mill pretreatment, ultrasonic pretreatment, agitation pretreatment, or hydrophobic pretreatment. Specifically, the nanocellulose may be obtained by subjecting nanocellulose dispersed in water to bead mill pretreatment, ultrasonic pretreatment, agitation pretreatment, or hydrophobic pretreatment.

First, the bead mill pretreatment may be carried out with a wet milling apparatus such as a vertical mill or a horizontal mill. A horizontal mill may be preferable in that the amount of beads that can be charged inside the chamber is greater, the machine's uneven wear is smaller, the wear of beads is smaller, and the maintenance and repair are convenient, but it is not limited thereto.

The bead mill pretreatment may be carried out using one or more beads selected from the group consisting of zirconium, zircon, zirconia, quartz, and aluminum oxide.

Specifically, the bead mill pretreatment may be carried out using beads having a diameter of 0.3 mm to 1 mm.

For example, the diameter of beads may be 0.3 mm to 1 mm, 0.35 mm to 0.95 mm, 0.4 mm to 0.9 mm, 0.45 mm to 0.7 mm, 0.45 mm to 0.85 mm, or 0.45 mm to 0.6 mm. As the diameter of beads satisfies the above range, it is possible to further enhance the dispersibility of the nanocellulose. If the diameter of beads exceeds the above range, the average particle size and particle size deviation of the nanocellulose may increase, which may reduce the dispersibility.

In addition, it may be preferable from the viewpoint of the transfer of sufficient energy that the bead mill pretreatment is carried out with beads having a specific gravity greater than that of the nanocellulose. For example, the beads may be one or more selected from the group consisting of zirconium, zircon, zirconia, quartz, and aluminum oxide, which have a specific gravity greater than that of the nanocellulose dispersed in water. Zirconium beads having a specific gravity greater than that of the nanocellulose dispersed in water by 4 times or more may be preferred, but they are not limited thereto.

The bead mill pretreatment may be carried out by filling beads in 80% or more of a chamber at a linear speed of 20 m/sec or less. For example, the bead mill pretreatment may be carried out at a bead filling rate of 80% or more, 81% or more, or 83% or more in a chamber and a linear speed of 17 m/sec or less, 18 m/sec or less, or 16 m/sec or less. As the filling rate and the linear speed satisfy the above ranges, the effect of the bead mill pretreatment, that is, the enhancement in dispersibility can be maximized.

In addition, the ultrasonic pretreatment is a method of physically crushing or pulverizing nanoparticles with waves generated by emitting ultrasound of 20 kHz into a solution.

Specifically, the ultrasonic pretreatment may be carried out for less than 30 minutes with an energy dose of 30,000 J or less. For example, the ultrasonic pretreatment may be carried out for less than 30 minutes, 23 minutes or less, 20 minutes or less, 13 minutes or less, 10 minutes or less, 6 minutes or less, or 3 minutes or less, with an energy dose of 30,000 J or less, 26,000 J or less, 24,500 J or less, 22,000 J or less, 19,500 J or less, 16,500 J or less, or 16,000 J or less. As the energy dose and the operation time of the ultrasonic pretreatment satisfy the above ranges, the effect of the ultrasonic pretreatment, that is, the enhancement in dispersibility can be maximized.

According to an embodiment, the nanocellulose may be pretreated with a bead mill or pretreated with ultrasound. Alternatively, the nanocellulose may be pretreated with both a bead mill and ultrasound. In such an event, it may be preferable that ultrasonic pretreatment is carried out after the bead mill pretreatment to prevent re-aggregation, thereby enhancing the dispersibility.

If the nanocellulose, specifically, the nanocellulose dispersed in water is pretreated with a bead mill or pretreated with ultrasound, the dispersibility can be maximized, whereby the number of cellulose particles can be increased. Specifically, the number of cellulose particles of nanocellulose dispersed in water and further pretreated with a bead mill or ultrasound may be greater than that of cellulose particles of nanocellulose dispersed in water without pretreatment with a bead mill or ultrasound, based on the same content. Thus, if the nanocellulose is further pretreated with a bead mill or ultrasound, the dispersion stability may be further enhanced.

In addition, the agitation pretreatment may be carried out for 1 minute to 90 minutes at 10,000 rpm or less. For example, the agitation pretreatment may be carried out using an agitator or a homogenizer and may be carried out for 10 minutes to 90 minutes, 30 minutes to 85 minutes, 45 minutes to 70 minutes, or 50 minutes to 65 minutes at 9,500 rpm or less, 6,500 rpm or less, 5,000 rpm or less, 3,500 rpm or less, 2,500 rpm or less, 2,200 rpm or less, or 2,000 rpm or less.

In addition, the hydrophobic pretreatment may be carried out by at least one method selected from the group consisting of acetylation, silanization, crosslinking, fluorination, addition of an alkyl ketene dimer (AKD), and addition of an alkyl succinic anhydride (ASA).

Specifically, as some of the hydroxyl groups of the nanocellulose are substituted with hydrophobic groups having a low affinity with water through the hydrophobic pretreatment method, dimensional stability can be further enhanced. For example, the silanization may be carried out by using methyltrimethoxysilane (MTMS), tetramethoxysilane (TMOS), dimethoxydimethylsilane (DMDMS), 3-methyl-acryl-oxypropyl trimethoxy silane (MAPTMS), titanium butoxide (TBOT), or trimethoxyphenyl-silane (TMPS), but it is not limited thereto.

The biodegradable polyester resin according to an embodiment has a polydispersity index (PDI) of less than 2.0. For example, the polydispersity index of the biodegradable polyester resin may be less than 2.0, 1.95 or less, or 1.9 or less.

As the polydispersity index is adjusted to the above range, the thermal resistance can be further enhanced. Specifically, if the polydispersity index exceeds the above range, the thermal resistance of the biodegradable polyester resin may be deteriorated, which is likely to cause the degradation of the polymer. Thus, in the process of preparing a molded article such as a film using the biodegradable polyester resin, the rate of degradation of a polymer may be decreased, thereby enhancing the processability and productivity.

The polydispersity index may be calculated according to the following Equation A.

[Equation A]

$$Polydispersity\ index\ (PDI) = \frac{Mw}{Mn}$$

in Equation A, Mw is the weight average molecular weight (g/mole) of a resin, and Mn is the number average molecular weight (g/mole) of the resin.

The weight average molecular weight and the number average molecular weight may be measured using gel permeation chromatography (GPC).

According to an embodiment, when the weight reduction rate (%) at a specific temperature (T°C) condition according to the following Equation 1 is referred to as $\Delta W_T$, $\Delta W_{220}$ may be 1.3% or less. Here, $\Delta W_T$ refers to the weight reduction rate (%) at a specific temperature (T°C) condition.

[Equation 1]

$$Weight\ reduction\ rate\ (\Delta W_T) = \frac{W - W_T}{W} \times 100$$

in Equation 1, W is the weight (mg) of the biodegradable polyester resin whose moisture content is adjusted to 100 ppm, and $W_T$ is the weight (mg) measured by a thermogravimetric analyzer after the biodegradable polyester resin whose moisture content has been adjusted is kept at T°C for 60 minutes.

Specifically, $\Delta W_{220}$ of the biodegradable polyester resin may be 1.3% or less, 1.25% or less, 1.23% or less, 1.2% or less, 1.18% or less, 1.16% or less, 1.15% or less, 1.13% or less, 1.1% or less, 1.05% or less, 1.0% or less, 0.98% or less, or 0.95% or less. As the weight reduction rate $\Delta W_{220}$ at 220°C, which is a common process temperature for manufacturing a molded article such as a film using a resin, satisfies the above range, the biodegradable polyester resin may have excellent thermal resistance.

In addition, the biodegradable polyester resin may satisfy the following Relationship 2.

[Relationship 2]

$$|\Delta W_{240} - \Delta W_{180}| \le 1.5\%$$

Specifically, $\Delta W_{240}$ and $\Delta W_{180}$ may each be calculated according to Equation 1. For example, $\Delta W_{240}$, which is the weight reduction rate at 240°C, may be 0.1% to 2.0%, 0.2% to 1.9%, 0.3% to 1.8%, 0.45% to 1.55%, 0.5% to 1.4%, 0.5% to 1.2%, 0.55% to 1.15%, or 0.6% to 1.1%. In addition, $\Delta W_{180}$, which is the weight reduction rate at 180°C, may be 0.05% to 0.3%, 0.07% to 0.26%, 0.09% to 0.25%, or 0.1% to 0.25%.

More specifically, the value according to Relationship 2 may be 1.5% or less, 1.3% or less, 1.2% or less, 1.1% or less, 1.0% or less, or 0.95% or less, or 0.1% to 1.5%, 0.15% to 1.3%, 0.2% to 1.2%, 0.3% to 1.0%, or 0.45% to 0.95%.

As the value according to Relationship 2 satisfies the above range, the biodegradable polyester resin may have excellent thermal stability. Specifically, the lower the difference in weight reduction rate in a wide temperature range of 180°C to 240°C, the better the thermal resistance. As a result, since the process conditions can be flexibly applied, processability and productivity can be further enhanced.

In addition, the biodegradable polyester resin may have a number of carboxyl end groups of 50 eq/ton or less. For example, the number of carboxyl end groups of the biodegradable polyester resin may be 50 eq/ton or less, 48 eq/ton or less, 45 eq/ton or less, 42 eq/ton or less, or 35 eq/ton or less. As the number of carboxyl end groups is adjusted within the above range, it is possible to reduce the incidence of polymer deterioration in the process of manufacturing a molded article such as a film from the biodegradable polyester resin, while enhancing all of the mechanical properties such as tensile strength and thermal resistance.

In addition, the biodegradable polyester resin may have an intrinsic viscosity (IV) of 1.1 dl/g or more. For example, the intrinsic viscosity (IV) of the biodegradable polyester resin may be 1.15 dl/g or more, 1.23 dl/g or more, 1.3 dl/g or more, 1.4 dl/g or more, 1.45 dl/g or more, 1.5 dl/g or more, 1.55 dl/g or more, or 1.62 dl/g or more.

**Process for preparing a biodegradable polyester resin**

The process for preparing a biodegradable polyester resin according to another embodiment comprises pretreating a mixture of a diol and a dicarboxylic acid to prepare a slurry; subjecting the slurry to an esterification reaction to prepare a prepolymer; and subjecting the prepolymer to a polycondensation reaction to prepare a polymer, wherein the biodegradable polyester resin comprises a first repeat unit comprising a first diol residue and an aromatic dicarboxylic acid residue; and a second repeat unit comprising a second diol residue and an aliphatic dicarboxylic acid residue, the polydispersity index (PDI) of the biodegradable polyester resin is less than 2.0, and, when the weight reduction rate (%) at a specific temperature (T°C) condition according to the above Equation 1 is referred to as $\Delta W_T$, $\Delta W_{220}$ of the biodegradable polyester resin is 1.3% or less.

First, a mixture of a diol and a dicarboxylic acid is pretreated to obtain a slurry.

The diol may comprise 1,4-butanediol, 1,2-ethanediol, 1,3-propanediol, or a derivative thereof as a diol component. Specifically, the diol may comprise 1,4-butanediol, 1,2-ethanediol, or a derivative thereof. It may comprise 1,4-butanediol or a derivative thereof. If the diol comprises 1,4-butanediol as a diol component, especially, if the diol is composed of 1,4-butanediol alone, it may be more advantageous for enhancing biodegradability, mechanical properties such as tensile strength, and thermal resistance. In addition, the diol may comprise a biomass-based diol component.

For example, the diol may comprise a first diol and a second diol as a diol component, and it may comprise 1,4-butanediol, 1,2-ethanediol, 1,3-propanediol, or a derivative thereof in an amount of 95% by mole or more. For example, the diol may comprise 1,4-butanediol, 1,2-ethanediol, 1,3-propanediol, or a derivative thereof in an amount of 97% by mole or more, 98% by mole or more, 99% by mole or more, or 100% by mole, based on the total number of moles of the diol component.

In addition, the dicarboxylic acid may comprise an aromatic dicarboxylic acid and an aliphatic dicarboxylic acid as a dicarboxylic acid component. Specifically, the aromatic dicarboxylic acid may comprise terephthalic acid, dimethyl terephthalate, or a derivative thereof, and the aliphatic dicarboxylic acid may comprise adipic acid, succinic acid, sebacic acid, or a derivative thereof.

The dicarboxylic acid may comprise an aromatic dicarboxylic acid in an amount of 30% by mole or more based on the total number of moles of the dicarboxylic acid component. For example, the content of the aromatic dicarboxylic acid may be 32% by mole or more, 36% by mole or more, 42% by mole or more, 46% by mole or more, or 50% by mole or more, or 30% by mole to 65% by mole, 33% by mole to 62% by mole, 35% by mole to 60% by mole, 38% by mole to 56% by mole, or 42% by mole to 52% by mole, based on the total number of moles of the dicarboxylic acid component.

The dicarboxylic acid may comprise an aliphatic dicarboxylic acid in an amount of 35% by mole or more based on the total number of moles of the dicarboxylic acid component. For example, the content of the aliphatic dicarboxylic acid may be 38% by mole or more, 45% by mole or more, 52% by mole or more, or 54% by mole or more, or 35% by mole to 70% by mole, 38% by mole to 67% by mole, 40% by mole to 65% by mole, 42% by mole to 60% by mole, or 45% by mole to 54% by mole, based on the total number of moles of the dicarboxylic acid component.

As the contents of the aromatic dicarboxylic acid and the aliphatic dicarboxylic acid are adjusted to the above ranges, in particular, as the content of the aliphatic dicarboxylic acid is adjusted to the above range, crystallinity and thermal stability are secured to induce sufficient orientation crystals by virtue of a sufficient crystallization speed, and biodegradability and dimensional stability can be further enhanced.

In addition, the step of preparing a slurry may be carried out by agitating a mixture of the diol and the dicarboxylic acid at 60°C to 100°C and 50 rpm to 200 rpm for 10 minutes or longer.

According to another embodiment, the step of preparing a slurry may comprise pretreating a mixture of the first diol and the aromatic dicarboxylic acid to prepare a first slurry; and pretreating a mixture of the second diol and the aliphatic dicarboxylic acid to prepare a second slurry.

Specifically, as the diol and the dicarboxylic acid are mixed and pretreated to form a slurry, the diol and the dicarboxylic acid can be uniformly reacted, and it is effective for expediting the esterification reaction, whereby the reaction efficiency can be increased.

In particular, if an aromatic dicarboxylic acid has complete crystallinity and is in a powder form as in terephthalic acid, its solubility in the diol is very low, whereby it may be difficult to carry out a homogeneous reaction. Thus, the step of forming a slurry by pretreatment, in particular, the step of forming a first slurry, may play a very important role in enhancing the reaction efficiency of the biodegradable polyester resin having excellent physical properties according to an embodiment.

In addition, as a first slurry is prepared by carrying out the pretreatment, it is possible to prevent the diol from being subjected to esterification with the aliphatic dicarboxylic acid in advance; thus, it may be easier to control the numbers and ratio of the first repeat unit and the second repeat unit.

Meanwhile, in the pretreatment, the structure and physical properties of the biodegradable polyester resin may vary depending on the particle size, standard deviation thereof, particle size distribution, pretreatment reaction conditions, and the like of the aromatic dicarboxylic acid; thus, it is very important to control them.

According to an embodiment, the aromatic dicarboxylic acid may comprise terephthalic acid. Details on the average particle diameter ($D_{50}$) of terephthalic acid and the standard deviation thereof are as described above.

Specifically, as terephthalic acid having an average particle diameter ($D_{50}$) of 15 μm to 400 μm and a standard

deviation of 100 or less, along with the first diol, is pretreated, a slurry without phase separation can be prepared, and crystallinity and thermal stability can be further enhanced.

According to another embodiment, the aromatic dicarboxylic acid may comprise dimethyl terephthalate. Unlike terephthalic acid, the melting point of dimethyl terephthalate is about 142°C; thus, it may be more preferable in terms of esterification reaction rate and reaction efficiency to convert dimethyl terephthalate into a molten state at 170°C and then mix it with the first diol.

According to an embodiment, the aliphatic dicarboxylic acid may comprise adipic acid. Details on the average particle diameter ($D_{50}$) of adipic acid and the standard deviation thereof are as described above.

Specifically, as adipic acid having an average particle diameter ($D_{50}$) of 50 $\mu$m to 500 $\mu$m and a standard deviation of 100 or less, along with the second diol, is pretreated, a slurry without phase separation can be prepared, and crystallinity and thermal stability can be further enhanced.

The pretreatment may be carried out by feeding the diol and the dicarboxylic acid into a slurry agitator (tank). Since it is very important to control the stirring force until the mixture of the diol and the dicarboxylic acid is formed into a slurry in the pretreatment, the number and shape of the agitating blades of the agitator, and process conditions such as pretreatment temperature and agitating speed are very important.

Specifically, the slurry agitator may be an anchor type at the bottom. More specifically, it may have a height to the agitator of 20 mm or more and two or more rotor blades. When the slurry agitator has such a structure, the slurry conversion efficiency can be further enhanced.

For example, the slurry agitator may have a height to the agitator of 20 mm or more. That is, the reactor and the bottom of the agitator are almost contiguous to each other. In such a case, the efficiency of forming a slurry can be further enhanced in that a slurry without precipitation can be obtained. If the shape of the slurry agitator does not satisfy the above conditions, when the diol and the aromatic dicarboxylic acid are initially mixed, the aromatic dicarboxylic acid may settle to the bottom, thereby causing phase separation. In addition, the pretreatment may be carried out by agitating a mixture of the diol and the aromatic dicarboxylic acid at 25°C to 100°C and 50 rpm to 500 rpm for 10 minutes or longer. For example, the pretreatment may be carried out at a temperature of 25°C to 85°C, 28°C to 60°C, 30°C to 55°C, or 26°C to 50°C, an agitation speed of 65 rpm to 400 rpm, 70 rpm to 320 rpm, 80 rpm to 300 rpm, 95 rpm to 260 rpm, 100 rpm to 200 rpm, or 120 rpm to 180 rpm, for 10 minutes or longer, 15 minutes or longer, 25 minutes or longer, 30 minutes or longer, 10 minutes to 200 minutes, 15 minutes to 160 minutes, 20 minutes to 120 minutes, 22 minutes to 100 minutes, or 26 minutes to 65 minutes.

As the temperature, agitating speed, and time of the pretreatment step satisfy the above ranges, a homogeneous slurry can be more efficiently obtained without phase separation, and it may be more preferable in terms of esterification reaction rate and reaction efficiency.

Thereafter, the slurry is subjected to an esterification reaction to prepare a prepolymer.

The prepolymer may be prepared by a one-step esterification reaction or may be prepared by a two-step esterification reaction through first and second esterification reactions.

First, in the case where the prepolymer is prepared by a one-step esterification reaction, the first and second slurries may be subjected to esterification at 250°C or lower for 0.5 hour to 5 hours to prepare a prepolymer.

For example, the one-step esterification reaction may be carried out at 240°C or lower, 235°C or lower, 180°C to 250°C, 180°C to 245°C, 185°C to 240°C, 190°C to 250°C, 190°C to 245°C, 195°C to 245°C, or 200°C to 240°C, until 95% of water as a by-product is discharged. The one-step esterification reaction may be carried out for 0.5 hour to 4.5 hours, 0.5 hour to 4 hours, 0.5 hour to 3.5 hours, 0.7 hour to 4.5 hours, 0.7 hour to 4 hours, 0.7 hour to 3.5 hours, or 1 hour to 3.5 hours.

According to another embodiment, the step of preparing a prepolymer may comprise subjecting the first slurry to a first esterification reaction at 190°C to 260°C; and adding the second slurry to the first esterification reaction product and subjecting them to a second esterification reaction at 160°C to 240°C.

The first esterification reaction may be carried out at 190°C to 260°C, 200°C to 245°C, 205°C to 235°C, or 210°C to 225°C, for 1 hour to 4 hours, 1.5 hours to 3.5 hours, or 2 hours to 3 hours.

The second esterification reaction may be carried out at 160°C to 240°C, 170°C to 230°C, 185°C to 225°C, or 210°C to 220°C, for 0.5 hour to 3 hours, 1 hour to 2.5 hours, or 1.5 hours to 2.2 hours.

According to another embodiment, the process for preparing a biodegradable polyester resin may further comprise adding nanocellulose. Details on the nanocellulose are as described above.

Specifically, the nanocellulose may be fed to the first esterification reactants or the second esterification reactants. More specifically, the nanocellulose may be fed prior to the first esterification reaction, or after the first esterification reaction and prior to the second esterification reaction.

In such an event, when the nanocellulose is added prior to the second esterification reaction, as compared with the case where it is added prior to the first esterification reaction, the binding force of nanocellulose can be enhanced, whereby biodegradability, thermal properties, and durability can be further enhanced.

Alternatively, the nanocellulose may be fed during the preparation of the second slurry. Specifically, it may be added, along with the second diol and the aliphatic dicarboxylic acid, in the step of pretreating a mixture of the second diol and the aliphatic dicarboxylic acid to prepare a second slurry.

The content of the nanocellulose fed may be 3,000 ppm or less based on the total weight of the first esterification reactants, the second esterification reactants, or the mixture of the second diol and the aliphatic dicarboxylic acid. For example, nanocellulose may be further fed in an amount of 3,000 ppm or less, 2,400 ppm or less, 2,300 ppm or less, 2,000 ppm or less, 1,800 ppm or less, 1,500 ppm or less, 1,250 ppm or less, or 1,000 ppm or less, and 100 ppm or more, 130 ppm or more, 190 ppm or more, 230 ppm or more, 260 ppm or more, 300 ppm or more, 330 ppm or more, 380 ppm or more, 420 ppm or more, or 450 ppm or more, based on the total weight of the first esterification reactants, the second esterification reactants, or the mixture of the second diol and the aliphatic dicarboxylic acid.

In addition, the nanocellulose may be added at a temperature of 20°C to 230°C, 25°C to 220°C, 150°C to 225°C, 185°C to 225°C, or 210°C to 220°C. As the feeding temperature of the nanocellulose satisfies the above range, it may be preferable in that mechanical properties such as tensile strength or durability can be enhanced.

Further, the nanocellulose may be fed at a rate of 2 kg/minute to 10 kg/minute, 2.5 kg/minute to 9.5 kg/minute, or 3 kg/minute to 8 kg/minute, to prevent aggregation along with enhancement of strength, impact strength, and thermal resistance and to maintain an appropriate process speed. If the feeding rate is less than the above range, an additional process may be required, and the rate may be too low, resulting in low efficiency. If the feeding rate exceeds the above range, re-aggregation may take place, thereby deteriorating tensile strength and thermal resistance.

In addition, a titanium-based catalyst or a germanium-based catalyst may be additionally added prior to the esterification reaction and/or prior to the polycondensation reaction described below.

For example, at least one catalyst selected from the group consisting of titanium isopropoxide, tetrapropyl titanate, tetrabutyl titanate, tetraisopropyl titanate, germanium oxide, germanium methoxide, germanium ethoxide, tetramethyl germanium, tetraethyl germanium, and germanium sulfide may be fed prior to the esterification reaction and/or the polycondensation reaction.

Here, the content of the catalyst fed may be 100 ppm to 1,000 ppm. For example, the content of the catalyst fed may be 100 ppm to 650 ppm, 120 ppm to 500 ppm, or 150 ppm to 350 ppm, based on the total weight of the diol, aromatic dicarboxylic acid, and aliphatic dicarboxylic acid. In addition, in the case where the catalyst is fed to both the esterification reaction and the polycondensation reaction, the total amount of the catalyst fed may be 1,200 ppm or less, 950 ppm or less, or 880 ppm or less.

In addition, an amine-based high-temperature thermal stabilizer such as tetraethylenepentaamine; at least one phosphorus-based stabilizer selected from the group consisting of phosphoric acid, phosphorous acid, polyphosphoric acid, trimethylphosphate, triethylphosphate, triethylphosphonoacetate, trimethylphosphine, and triphenylphosphine; or a branching agent such as glycerol may be fed prior to the esterification reaction and/or prior to the polycondensation reaction described below. For example, the stabilizer may be fed prior to the second esterification reaction or prior to the polycondensation reaction, and the branching agent may be fed prior to the first esterification reaction or the second esterification reaction.

The content of the stabilizer or branching agent may be 3,000 ppm or less. For example, the content of the phosphorus-based stabilizer or the branching agent may be 10 ppm to 3,000 ppm, 20 ppm to 2,000 ppm, 25 ppm to 1,500 ppm, or 30 ppm to 1,000 ppm, based on the total weight of the diol, aromatic dicarboxylic acid, and aliphatic dicarboxylic acid. As the content of the phosphorus-based stabilizer satisfies the above range, it may be advantageous in that the degradation of the polymer due to high temperatures during the reaction process can be suppressed, thereby reducing the end groups of the polymer, or color can be improved.

In addition, at least one selected from the group consisting of an additive such as silica, potassium, and magnesium and a color-correcting agent such as cobalt acetate may be further fed prior to the polycondensation reaction. Specifically, the additive and/or color-correcting agent may be added after the completion of the esterification reaction and then stabilized, and the polycondensation reaction may then be carried out.

The prepolymer may have a number average molecular weight of 800 to 30,000 g/mole. For example, the number average molecular weight of the prepolymer may be 850 g/mole to 20,000 g/mole, 880 g/mole to 18,000 g/mole, 900 g/mole to 10,000 g/mole, 920 g/mole to 8,000 g/mole, 940 g/mole to 4,500 g/mole, or 960 g/mole to 2,000 g/mole.

The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

Thereafter, the prepolymer is subjected to a polycondensation reaction to prepare a polymer.

Specifically, the polycondensation reaction may be carried out in two steps. For example, the prepolymer may be subjected to a first polycondensation reaction, which may then be fed to a disc ring-type reactor and subjected to a second polycondensation reaction to obtain a polymer. In such an event, the second polycondensation may be carried out while 1,4-butanediol vapor and by-products are removed.

The first polycondensation reaction may be carried out at a temperature of 255°C or lower, 250°C or lower, 245°C or lower, 240°C or lower, 215°C to 255°C, 225°C to 245°C, or 230°C to 242°C, a pressure of 1 Torr to 100 Torr, 10 Torr to 100 Torr, 25 Torr to 100 Torr, or 30 Torr to 85 Torr, for 0.5 hour to 3 hours, 1 hour to 2.5 hours, or 1.5 hours to 2 hours.

In addition, the second polycondensation reaction may be carried out at a temperature of 210°C to 250°C, 215°C to 245°C, or 225°C to 245°C, while the pressure is reduced to 1 Torr or lower, 0.8 Torr or lower, or 0.5 Torr or lower, for 0.5 hour or longer, 0.8 hour or longer, or 1 hour or longer.

As the temperature, pressure, and time conditions of the first polycondensation and the second polycondensation each satisfy the above ranges, mechanical properties and thermal resistance can be enhanced.

The polymer may have a number average molecular weight of 40,000 g/mole or more. For example, the number average molecular weight of the polymer may be 43,000 g/mole or more, 48,000 g/mole or more, or 55,000 g/mole or more, or 40,000 g/mole to 70,000 g/mole, 42,000 g/mole to 65,000 g/mole, 45,000 g/mole to 58,000 g/mole, or 48,000 g/mole to 55,000 g/mole. As the number average molecular weight of the polymer satisfies the above range, mechanical properties, processability, and productivity can be further enhanced.

According to another embodiment, biodegradable polyester resin pellets may be prepared from the polymer.

Specifically, the polymer may be cooled to 70°C or lower, 50°C or lower, 45°C or lower, or 25°C or lower, and the cooled polymer may then be subjected to underwater cutting or strand cutting to prepare pellets.

The cutting step may be carried out using a pellet cutter without limitations as long as it is commonly used in the art, and the pellets may have various shapes.

## Molded article

An embodiment may provide an article molded from the biodegradable polyester resin.

Specifically, the molded article may be prepared by molding a composition comprising the biodegradable polyester resin by a method known in the art such as extrusion and stretching, extrusion and blowing, injection, or the like, and the molded article may be an injection molded article, an extrusion molded article, a thin film molded article, or a blow molded article, but it is not limited thereto.

For example, the molded article may be in the form of a film or sheet that can be used as agricultural mulching films, disposable gloves, disposable films, disposable bags, food packaging materials, or garbage bags, in the form of a fiber that can be used as fabrics, knitted fabrics, nonwoven fabrics, or ropes, or in the form of a container that can be used as a container for food packaging such as lunch boxes. In addition, the molded article may be a molded article of various types such as disposable straws, spoons, food plates, and forks.

Further, the biodegradable polyester resin can be applied to various fields that require thermal resistance, mechanical properties, dimensional stability, and moldability, such as packaging materials such as disposable bags and food containers, and automobile interior parts, so that they would exhibit excellent characteristics.

## Biodegradable polyester film

The biodegradable polyester film according to another embodiment of the present invention comprises a biodegradable polyester resin, wherein the biodegradable polyester resin comprises a first repeat unit comprising a first diol residue and an aromatic dicarboxylic acid residue; and a second repeat unit comprising a second diol residue and an aliphatic dicarboxylic acid residue, the polydispersity index (PDI) of the biodegradable polyester resin is less than 2.0, and, when the weight reduction rate (%) at a specific temperature ($T°C$) condition according to the above Equation 1 is referred to as $\Delta W_T$, $\Delta W_{220}$ of the biodegradable polyester resin is 1.3% or less.

Details on the biodegradable polyester resin are as described above.

Specifically, as the biodegradable polyester film comprises the biodegradable polyester resin, more specifically, as it is prepared using the biodegradable polyester resin, it has excellent biodegradability, mechanical properties such as tensile strength and impact strength, and thermal resistance.

The biodegradable polyester film may have a tensile strength of 30 MPa or more. For example, the tensile strength of the biodegradable polyester film may be 30 MPa or more, 33 MPa or more, or 35 MPa or more, or 30 MPa to 70 MPa, 33 MPa to 65 MPa, 35 MPa to 60 MPa, 35 MPa to 50 MPa, or 35 MPa to 45 MPa.

In addition, the biodegradable polyester film may have an impact absorption energy of 5.0 KJ/m or more. For example, the impact absorption energy of the biodegradable polyester resin may be 5.0 KJ/m or more, 5.3 KJ/m or more, or 5.4 KJ/m or more, or 5.0 KJ/m to 10.0 KJ/m, 5.0 KJ/m to 9.5 KJ/m, 5.0 KJ/m to 8.5 KJ/m, 5.2 KJ/m to 7.3 KJ/m, 5.4 KJ/m to 6.9 KJ/m, or 5.4 KJ/m to 6.7 KJ/m.

The biodegradable polyester film may have an intrinsic viscosity ($IV_2$) of 0.9 dl/g or more, 0.95 dl/g or more, 1.0 dl/g or more, 1.05 dl/g or more, 1.2 dl/g or more, or 1.23 dl/g or more.

In addition, the biodegradable polyester film may satisfy the following Equation 3.

[Equation 3]

$$|IV_1 - IV_2| \leq 0.2$$

In Equation 3, $IV_1$ is the intrinsic viscosity (dl/g) of the biodegradable polyester resin, and $IV_2$ is the intrinsic viscosity (dl/g) of the biodegradable polyester film.

For example, the value of Relationship 3 may be 0.2 or less, 0.19 or less, or 0.18 or less, or 0.01 to 0.2, 0.01 to 0.18, 0.02 to 0.18, or 0.04 to 0.18.

As the change in intrinsic viscosity (IV drop) of the biodegradable polyester film according to an embodiment, which is the absolute value of the difference between the intrinsic viscosity ($IV_1$) of the resin and the intrinsic viscosity ($IV_2$) of a film prepared therefrom, satisfies the above range, fumes are hardly generated in the manufacturing process, resulting in excellent quality.

In addition, the biodegradable polyester film may have a thickness of 5 μm to 200 μm. For example, the thickness of the biodegradable polyester film may be 5 μm to 160 μm, 6 μm to 130 μm, 8 μm to 115 μm, 10 μm to 100 μm, 12 μm to 90 μm, or 13 μm to 85 μm.

The biodegradable polyester film may have a biodegradability of 90% or more. For example, the biodegradability of the biodegradable polyester film may be 91% or more, 92% or more, 93% or more, 94% or more, or 95% or more.

## Process for preparing a biodegradable polyester film

The process for preparing a biodegradable polyester film according to another embodiment may comprise molding a composition or pellets comprising a biodegradable polyester resin.

Specifically, the molding step may be a step of compounding the composition or pellets, followed by melt-extruding the same and applying static electricity thereto, a step of compounding, followed by molding to form a bubble using a blowing facility, or a step of compounding, followed by molding with an injection molding machine, but it is not limited thereto.

The composition or pellets may comprise an electrostatic agent. Specifically, the electrostatic agent may be used to lower the pinning properties and may be a metal acetate such as magnesium acetate, sodium acetate, or calcium acetate. The pinning properties refer to a phenomenon in which a composition containing a resin sticks to a roll or the like in the manufacturing process, thereby deteriorating physical properties. If the pinning properties are high, the change in intrinsic viscosity (IV drop), which is the absolute value of the difference between the intrinsic viscosity of a resin and the intrinsic viscosity ($IV2$) of a film prepared therefrom, may increase, fumes may be generated, the viscosity in the extrusion process is very low to increase the flowability, which causes an increase in the thickness deviation, whereby the tensile strength, impact strength, and thermal resistance of the film may be deteriorated.

The content of the electrostatic agent may be 45 ppm or less based on the total weight of the composition or pellets comprising the biodegradable polyester resin. For example, the electrostatic agent may be employed in an amount of 45 ppm or less, 40 ppm or less, 35 ppm or less, 30 ppm or less, 25 ppm or less, 20 ppm or less, 18 ppm or less, 15 ppm or less, or 10 ppm or less, based on the total weight of the composition or pellets. The content of the electrostatic agent is much lower than that of the conventional electrostatic agent. Since the biodegradable polyester resin according to an embodiment has excellent thermal resistance, disconnection would not take place in the electrostatic application method even when a very small amount of the electrostatic agent is used.

In addition, the composition may comprise at least one additive selected from the group consisting of silica, potassium, magnesium, and calcium carbonate. Silica is preferably spherical, but it is not limited thereto.

The content of the additive may be 10 ppm to 1,000 ppm based on the total weight of the composition or pellets comprising the biodegradable polyester resin. For example, the content of the additive may be 10 ppm to 1,000 ppm, 20 ppm to 850 ppm, 25 ppm to 700 ppm, 30 ppm to 600 ppm, 40 ppm to 550 ppm, or 45 ppm to 550 ppm, based on the total weight of the composition or pellets.

The process for preparing a biodegradable polyester film according to another embodiment may comprise drying and melt-extruding biodegradable polyester resin pellets.

Details on the biodegradable polyester resin pellets are as described above.

The drying may be carried out at 60°C to 100°C for 2 hours to 12 hours. Specifically, the drying may be carried out at 62°C to 80°C, 63°C to 75°C, or 65°C to 70°C, for 3 hours to 10 hours or 4 hours to 7 hours. As the drying process conditions of pellets satisfy the above ranges, it is possible to further enhance the quality of a biodegradable polyester film thus produced.

The melt-extrusion may be carried out at 140°C or higher. For example, the melt-extrusion may be carried out at 155°C or higher, 170°C or higher, 190°C or higher, or 210°C or higher.

**Mode for the Invention**

Hereinafter, the present invention will be described in more detail with reference to the following examples. But the following Examples are intended to illustrate the present invention, and the scope of the Examples is not limited thereto only.

**[Example]**

**Preparation of biodegradable polyester resin pellets**

**Example 1-1**

(1) Preparation of a slurry

52% by mole of 1,4-butanediol (1,4-BDO) as a diol component and 52% by mole of terephthalic acid (TPA) as an aromatic dicarboxylic acid were charged at a ratio of diol to dicarboxylic acid of 1.3 to a first slurry tank (provided with an anchor type at the bottom, a height to the agitator of 30 mm, and three rotor blades), which was agitated at 35°C and 150 rpm for 30 minutes to prepare a first slurry without phase separation. Here, terephthalic acid (TPA) had an average particle diameter (D50) of 130 $\mu$m and a standard deviation (SD) of the average particle diameter (D50) of 25.

In addition, 48% by mole of 1,4-butanediol (1,4-BDO) as a diol component and 48% by mole of adipic acid (AA) as an aliphatic dicarboxylic acid were charged at a ratio of diol to dicarboxylic acid of 1.3 to a second slurry tank (provided with an anchor type at the bottom, a height to the agitator of 30 mm, and three rotor blades). 1,000 ppm of cellulose nanocrystals (CNC with a terminal group of -SO$_3$Na, average particle size: 190 nm, particle size deviation: 25%, manufacturer: Celluforce) as nanocellulose was added thereto, which was agitated at 35°C and 150 rpm for 30 minutes to prepare a second slurry without phase separation. Here, adipic acid (AA) had an average particle diameter (D50) of 300 $\mu$m and a standard deviation (SD) of the average particle diameter (D50) of 20.

(2) Preparation of a prepolymer

The first and second slurries prepared in step (1) were fed to a reactor through supply lines. While 500 ppm of tetrabutyl titanate (product name: Tyzor, manufacturer: Dupont) as a titanium-based catalyst was added thereto, the temperature was raised to 210°C, and an esterification reaction was carried out for 2.5 hours until 95% of water as a by-product was discharged, to thereby prepare a prepolymer having a number average molecular weight of 1,500 g/mole.

(3) Preparation of a polymer

200 ppm of tetrabutyl titanate (product name: Tyzor, manufacturer: Dupont) as a titanium-based catalyst and 100 ppm of triethyl phosphate as a thermal stabilizer were added to the prepolymer prepared in step (2), which was stabilized for 10 minutes and then subjected to a first polycondensation reaction at 240°C and 50 Torr for 1.5 hours.

Thereafter, the first polycondensation reaction product was charged to a disc ring-type reactor and subjected to a second polycondensation reaction at 240°C and 0.5 Torr for 3 hours with the rotation thereof, to thereby prepare a polymer having a number average molecular weight of 60,000 g/mole. In such an event, the second polycondensation was carried out while 1,4-butanediol vapor and by-products were removed.

Thereafter, the polymer was immersed in water and cut using an underwater cutter to prepare biodegradable polyester resin pellets.

**Example 1-2**

(1) Preparation of a slurry

53% by mole of 1,4-butanediol (1,4-BDO) as a diol component and 53% by mole of terephthalic acid (TPA) as an aromatic dicarboxylic acid were charged at a ratio of diol to dicarboxylic acid of 1.4 to a first slurry tank (provided with an anchor type at the bottom, a height to the agitator of 30 mm, and three rotor blades), which was agitated at 37°C and 150 rpm for 30 minutes to prepare a first slurry without phase separation. Here, terephthalic acid (TPA) had an average particle diameter (D50) of 130 $\mu$m and a standard deviation (SD) of the average particle diameter (D50) of 25.

In addition, 47% by mole of 1,4-butanediol (1,4-BDO) as a diol component and 47% by mole of adipic acid (AA) as an aliphatic dicarboxylic acid were charged at a ratio of diol to dicarboxylic acid of 1.2 to a second slurry tank (provided with an anchor type at the bottom, a height to the agitator of 30 mm, and three rotor blades). 500 ppm of cellulose nanofibers (CNF with average particle size: 500 nm, particle size deviation: 20%, manufacturer: Daiichi Industrial Pharmaceutical) as nanocellulose was added thereto, which was agitated at 37°C and 150 rpm for 30 minutes to prepare a second slurry without phase separation. Here, adipic acid (AA) had an average particle diameter (D50) of 280 $\mu$m and a standard deviation (SD) of the average particle diameter (D50) of 25.

(2) Preparation of a prepolymer

The first and second slurries prepared in step (1) were fed to a reactor through supply lines. While 400 ppm of tetrabutyl titanate (product name: Tyzor, manufacturer: Dupont) as a titanium-based catalyst was added thereto, the temperature was raised to 210°C, and an esterification reaction was carried out for 2.5 hours until 95% of water as a by-product was discharged, to thereby prepare a prepolymer having a number average molecular weight of 2,000 g/mole.

(3) Preparation of a polymer

100 ppm of tetrabutyl titanate (product name: Tyzor, manufacturer: Dupont) as a titanium-based catalyst and 100 ppm of triethyl phosphate as a thermal stabilizer were added to the prepolymer prepared in step (2), which was stabilized for 10 minutes and then subjected to a first polycondensation reaction at 245°C and 30 Torr for 1.5 hours.
Thereafter, the first polycondensation reaction product was charged to a disc ring-type reactor and subjected to a second polycondensation reaction at 240°C and 0.5 Torr for 2.5 hours with the rotation thereof, to thereby prepare a polymer having a number average molecular weight of 54,000 g/mole. In such an event, the second polycondensation was carried out while 1,4-butanediol vapor and by-products were removed.
Thereafter, the polymer was immersed in water and cut using an underwater cutter to prepare biodegradable polyester resin pellets.

**Example 1-3**

(1) Preparation of a slurry

50% by mole of 1,4-butanediol (1,4-BDO) as a diol component and 50% by mole of terephthalic acid (TPA) as an aromatic dicarboxylic acid were charged at a ratio of diol to dicarboxylic acid of 1.35 to a first slurry tank (provided with an anchor type at the bottom, a height to the agitator of 30 mm, and three rotor blades), which was agitated at 39°C and 150 rpm for 30 minutes to prepare a first slurry without phase separation. Here, terephthalic acid (TPA) had an average particle diameter (D50) of 130 $\mu$m and a standard deviation (SD) of the average particle diameter (D50) of 25.
In addition, 50% by mole of 1,4-butanediol (1,4-BDO) as a diol component and 50% by mole of adipic acid (AA) as an aliphatic dicarboxylic acid were charged at a ratio of diol to dicarboxylic acid of 1.25 to a second slurry tank (provided with an anchor type at the bottom, a height to the agitator of 30 mm, and three rotor blades). 700 ppm of cellulose nanocrystals (CNC with a carboxyl (-COOH) group, average particle size: 150 nm, particle size deviation: 29%, manufacturer: Blue Goose Refinery) as nanocellulose was added thereto, which was agitated at 39°C and 150 rpm for 30 minutes to prepare a second slurry without phase separation. Here, adipic acid (AA) had an average particle diameter (D50) of 320 $\mu$m and a standard deviation (SD) of the average particle diameter (D50) of 30.

(2) Preparation of a prepolymer

The first and second slurries prepared in step (1) were fed to a reactor through supply lines. While 300 ppm of tetrabutyl titanate (product name: Tyzor, manufacturer: Dupont) as a titanium-based catalyst was added thereto, the temperature was raised to 200°C, and an esterification reaction was carried out for 3.5 hours until 95% of water as a by-product was discharged, to thereby prepare a prepolymer having a number average molecular weight of 900 g/mole.

(3) Preparation of a polymer

100 ppm of tetrabutyl titanate (product name: Tyzor, manufacturer: Dupont) as a titanium-based catalyst and 100 ppm of triethyl phosphate as a thermal stabilizer were added to the prepolymer prepared in step (2), which was stabilized for 10 minutes and then subjected to a first polycondensation reaction at 235°C and 40 Torr for 1.5 hours.
Thereafter, the first polycondensation reaction product was charged to a disc ring-type reactor and subjected to a second polycondensation reaction at 245°C and 0.5 Torr for 2.8 hours with the rotation thereof, to thereby prepare a polymer having a number average molecular weight of 55,000 g/mole. In such an event, the second polycondensation was carried out while 1,4-butanediol vapor and by-products were removed.
Thereafter, the polymer was immersed in water and cut using an underwater cutter to prepare biodegradable polyester resin pellets.

**Example 1-4**

(1) Preparation of a slurry

50% by mole of 1,4-butanediol (1,4-BDO) as a diol component and 50% by mole of terephthalic acid (TPA) as an aromatic dicarboxylic acid were charged at a ratio of diol to dicarboxylic acid of 1.4 to a first slurry tank (provided with an anchor type at the bottom, a height to the agitator of 30 mm, and three rotor blades), which was agitated at 40°C and 150 rpm for 30 minutes to prepare a first slurry without phase separation. Here, terephthalic acid (TPA) had an average particle diameter (D50) of 130 $\mu$m and a standard deviation (SD) of the average particle diameter (D50) of 25.

In addition, 50% by mole of 1,4-butanediol (1,4-BDO) as a diol component and 50% by mole of adipic acid (AA) as an aliphatic dicarboxylic acid were charged at a ratio of diol to dicarboxylic acid of 1.3 to a second slurry tank (provided with an anchor type at the bottom, a height to the agitator of 30 mm, and three rotor blades), which was agitated at 40°C and 150 rpm for 30 minutes to prepare a second slurry without phase separation. Here, adipic acid (AA) had an average particle diameter (D50) of 300 $\mu$m and a standard deviation (SD) of the average particle diameter (D50) of 20.

(2) Preparation of a prepolymer

The first and second slurries prepared in step (1) were fed to a reactor through supply lines. While 300 ppm of tetrabutyl titanate (product name: Tyzor, manufacturer: Dupont) as a titanium-based catalyst was added thereto, the temperature was raised to 220°C, and an esterification reaction was carried out for 2.5 hours until 95% of water as a by-product was discharged, to thereby prepare a prepolymer having a number average molecular weight of 2,000 g/mole.

(3) Preparation of a polymer

200 ppm of tetrabutyl titanate (product name: Tyzor, manufacturer: Dupont) as a titanium-based catalyst and 100 ppm of triethyl phosphate as a thermal stabilizer were added to the prepolymer prepared in step (2), which was stabilized for 10 minutes and then subjected to a first polycondensation reaction at 235°C and 80 Torr for 1 hour.

Thereafter, the first polycondensation reaction product was charged to a disc ring-type reactor and subjected to a second polycondensation reaction at 235°C and 0.5 Torr for 2.8 hours with the rotation thereof, to thereby prepare a polymer having a number average molecular weight of 50,000 g/mole. In such an event, the second polycondensation was carried out while 1,4-butanediol vapor and by-products were removed.

Thereafter, the polymer was immersed in water and cut using an underwater cutter to prepare biodegradable polyester resin pellets.

**Example 1-5**

(1) Preparation of a slurry

50% by mole of 1,4-butanediol (1,4-BDO) as a diol component and 50% by mole of terephthalic acid (TPA) as an aromatic dicarboxylic acid were charged at a ratio of diol to dicarboxylic acid of 1.5 to a first slurry tank (provided with an anchor type at the bottom, a height to the agitator of 30 mm, and three rotor blades), which was agitated at 35°C and 150 rpm for 30 minutes to prepare a first slurry without phase separation. Here, terephthalic acid (TPA) had an average particle diameter (D50) of 130 $\mu$m and a standard deviation (SD) of the average particle diameter (D50) of 25.

In addition, 48% by mole of 1,4-butanediol (1,4-BDO) as a diol component and 48% by mole of adipic acid (AA) as an aliphatic dicarboxylic acid were charged at a ratio of diol to dicarboxylic acid of 1.3 to a second slurry tank (provided with an anchor type at the bottom, a height to the agitator of 30 mm, and three rotor blades). 1,000 ppm of cellulose nanocrystals (CNC with a terminal group of -SO$_3$Na, average particle size: 190 nm, particle size deviation: 23%, manufacturer: Celluforce) as nanocellulose was added thereto, which was agitated at 35°C and 150 rpm for 30 minutes to prepare a second slurry without phase separation. Here, adipic acid (AA) had an average particle diameter (D50) of 300 $\mu$m and a standard deviation (SD) of the average particle diameter (D50) of 20.

(2) Preparation of a prepolymer

The first slurry prepared in step (1) was fed to a reactor through a supply line. While 200 ppm of tetrabutyl titanate (product name: Tyzor, manufacturer: Dupont) as a titanium-based catalyst was added thereto, the temperature was raised to 210°C, and a first esterification reaction was carried out for 2 hours until 95% of water as a by-product was discharged.

Thereafter, the second slurry was fed to the first esterification reaction product. While 150 ppm of tetrabutyl titanate (product name: Tyzor, manufacturer: Dupont) as a titanium-based catalyst was added thereto, the temperature was raised to 210°C, and a second esterification reaction was carried out for 2 hours until 95% of water as a by-product was discharged, to thereby prepare a prepolymer having a number average molecular weight of 1,800 g/mole.

(3) Preparation of a polymer

200 ppm of tetrabutyl titanate (product name: Tyzor, manufacturer: Dupont) as a titanium-based catalyst and 100 ppm of triethyl phosphate as a thermal stabilizer were added to the prepolymer prepared in step (2), which was stabilized for 10 minutes and then subjected to a first polycondensation reaction at 240°C and 100 Torr for 0.5 hours.

Thereafter, the first polycondensation reaction product was charged to a disc ring-type reactor and subjected to a second polycondensation reaction at 245°C and 0.5 Torr for 3 hours with the rotation thereof, to thereby prepare a polymer having a number average molecular weight of 55,000 g/mole. In such an event, the second polycondensation was carried out while 1,4-butanediol vapor and by-products were removed.

Thereafter, the polymer was immersed in water and cut using an underwater cutter to prepare biodegradable polyester resin pellets.

**Comparative Example 1-1**

(1) Preparation of a slurry

The first and second slurries were prepared in the same manner as in Example 1-4.

(2) Preparation of a prepolymer

The first and second slurries prepared in step (1) were fed to a reactor through supply lines. While 300 ppm of tetrabutyl titanate (product name: Tyzor, manufacturer: Dupont) as a titanium-based catalyst was added thereto, the temperature was raised to 240°C, and an esterification reaction was carried out for 2 hours until 95% of water as a by-product was discharged, to thereby prepare a prepolymer having a number average molecular weight of 500 g/mole.

(3) Preparation of a polymer

200 ppm of tetrabutyl titanate (product name: Tyzor, manufacturer: Dupont) as a titanium-based catalyst and 50 ppm of triethyl phosphate as a thermal stabilizer were added to the prepolymer prepared in step (2), which was stabilized for 10 minutes and then subjected to a first polycondensation reaction at 265°C and 150 Torr for 0.5 hours.

Thereafter, the first polycondensation reaction product was charged to a disc ring-type reactor and subjected to a second polycondensation reaction at 265°C and 0.5 Torr for 1.5 hours with the rotation thereof, to thereby prepare a polymer having a number average molecular weight of 38,000 g/mole. In such an event, the second polycondensation was carried out while 1,4-butanediol vapor and by-products were removed.

Thereafter, the polymer was immersed in water and cut using an underwater cutter to prepare biodegradable polyester resin pellets.

**Comparative Example 1-2**

(1) Preparation of a slurry

48% by mole of 1,4-butanediol (1,4-BDO) as a diol component and 48% by mole of terephthalic acid (TPA) as an aromatic dicarboxylic acid were charged at a ratio of diol to dicarboxylic acid of 1.1 to a first slurry tank (provided with an anchor type at the bottom, a height to the agitator of 30 mm, and three rotor blades), which was agitated at 40°C and 150 rpm for 30 minutes to prepare a first slurry without phase separation. Here, terephthalic acid (TPA) had an average particle diameter (D50) of 130 $\mu$m and a standard deviation (SD) of the average particle diameter (D50) of 25.

In addition, 52% by mole of 1,4-butanediol (1,4-BDO) as a diol component and 52% by mole of adipic acid (AA) as an aliphatic dicarboxylic acid were charged at a ratio of diol to dicarboxylic acid of 1.1 to a second slurry tank (provided with an anchor type at the bottom, a height to the agitator of 30 mm, and three rotor blades), which was agitated at 40°C and 150 rpm for 30 minutes to prepare a second slurry without phase separation. Here, adipic acid (AA) had an average particle diameter (D50) of 300 $\mu$m and a standard deviation (SD) of the average particle diameter (D50) of 40.

(2) Preparation of a prepolymer

The first and second slurries prepared in step (1) were fed to a reactor through supply lines. While 1,000 ppm of tetrabutyl titanate (product name: Tyzor, manufacturer: Dupont) as a titanium-based catalyst was added thereto, the temperature was raised to 240°C, and an esterification reaction was carried out for 3.5 hours until 95% of water as a by-product was discharged, to thereby prepare a prepolymer having a number average molecular weight of 600 g/mole.

(3) Preparation of a polymer

500 ppm of tetrabutyl titanate (product name: Tyzor, manufacturer: Dupont) as a titanium-based catalyst and 50 ppm of triethyl phosphate as a thermal stabilizer were added to the prepolymer prepared in step (2), which was stabilized for 10 minutes and then subjected to a first polycondensation reaction at 260°C and 300 Torr for 0.5 hours.
Thereafter, the first polycondensation reaction product was charged to a disc ring-type reactor and subjected to a second polycondensation reaction at 260°C and 0.5 Torr for 4.5 hours with the rotation thereof, to thereby prepare a polymer having a number average molecular weight of 70,000 g/mole. In such an event, the second polycondensation was carried out while 1,4-butanediol vapor and by-products were removed.
Thereafter, the polymer was immersed in water and cut using an underwater cutter to prepare biodegradable polyester resin pellets.

**Comparative Example 1-3**

(1) Preparation of a slurry

100% by mole of 1,4-butanediol (1,4-BDO) as a diol component and 100% by mole of succinic acid (SA) as an aliphatic dicarboxylic acid were charged at a ratio of diol to dicarboxylic acid of 1.2 to a slurry tank (provided with an anchor type at the bottom, a height to the agitator of 30 mm, and three rotor blades), which was agitated at 40°C and 150 rpm for 30 minutes to prepare a slurry without phase separation. Here, succinic acid (SA) had an average particle diameter (D50) of 200 $\mu$m and a standard deviation (SD) of the average particle diameter (D50) of 30.

(2) Preparation of a prepolymer

The slurry prepared in step (1) was fed to a reactor through a supply line. While 1,500 ppm of tetrabutyl titanate (product name: Tyzor, manufacturer: Dupont) as a titanium-based catalyst was added thereto, the temperature was raised to 245°C, and an esterification reaction was carried out for 4 hours until 95% of water as a by-product was discharged, to thereby prepare a prepolymer having a number average molecular weight of 700 g/mole.

(3) Preparation of a polymer

500 ppm of tetrabutyl titanate (product name: Tyzor, manufacturer: Dupont) as a titanium-based catalyst and 50 ppm of triethyl phosphate as a thermal stabilizer were added to the prepolymer prepared in step (2), which was stabilized for 10 minutes and then subjected to a first polycondensation reaction at 265°C and 400 Torr for 0.5 hours.
Thereafter, the first polycondensation reaction product was charged to a disc ring-type reactor and subjected to a second polycondensation reaction at 265°C and 1.0 Torr for 4.5 hours with the rotation thereof, to thereby prepare a polymer having a number average molecular weight of 40,000 g/mole. In such an event, the second polycondensation was carried out while 1,4-butanediol vapor and by-products were removed.
Thereafter, the polymer was immersed in water and cut using an underwater cutter to prepare biodegradable polyester resin pellets.

**Comparative Example 1-4**

(1) Preparation of a slurry

The first and second slurries were prepared in the same manner as in Example 1-4.

(2) Preparation of a prepolymer

The first and second slurries prepared in step (1) were fed to a reactor through supply lines. While 1,000 ppm of tetrabutyl titanate (product name: Tyzor, manufacturer: Dupont) as a titanium-based catalyst was added thereto, the temperature was raised to 240°C, and an esterification reaction was carried out for 2 hours until 95% of water as a by-product was discharged, to thereby prepare a prepolymer having a number average molecular weight of 600 g/mole.

(3) Preparation of a polymer

500 ppm of tetrabutyl titanate (product name: Tyzor, manufacturer: Dupont) as a titanium-based catalyst and 50 ppm of triethyl phosphate as a thermal stabilizer were added to the prepolymer prepared in step (2), which was stabilized for 10 minutes and then subjected to a first polycondensation reaction at 265°C and 0.3 Torr for 0.5 hours.

Thereafter, the first polycondensation reaction product was charged to a disc ring-type reactor and subjected to a second polycondensation reaction at 265°C and 1.0 Torr for 4.5 hours with the rotation thereof, to thereby prepare a polymer having a number average molecular weight of 28,000 g/mole. In such an event, the second polycondensation was carried out while 1,4-butanediol vapor and by-products were removed.

Thereafter, the polymer was immersed in water and cut using an underwater cutter to prepare biodegradable polyester resin pellets.

**[Test Example]**

**Test Example 1-1: Polydispersity index (PDI)**

The resin pellets prepared in Examples 1-1 to 1-5 and Comparative Examples 1-1 to 1-4 were each calculated for the polydispersity index (PDI) according to the following Equation A.

$$[\text{Equation A}]$$

$$Polydispersity\ index\ (PDI) = \frac{Mw}{Mn}$$

In Equation A, Mw is the weight average molecular weight (g/mole) of a resin, and Mn is the number average molecular weight (g/mole) of the resin.

**Test Example 1-2: Number of carboxyl end groups**

The resin pellets prepared in Examples 1-1 to 1-5 and Comparative Examples 1-1 to 1-4 were each dissolved in benzyl alcohol and dispersed in chloroform, and phenol red as an indicator was then added thereto. Thereafter, the carboxyl group (-COOH) of the resin was converted to -COONa using N/10-sodium hydroxide-benzyl alcohol (primary standard solution of sodium hydroxide benzyl alcohol). In such an event, the number of carboxyl end groups of the resin (eq/ton) was measured from the amount of N/10-sodium hydroxide-benzyl alcohol used.

**Test Example 1-2: Weight reduction rate**

The resin pellets prepared in Examples 1-1 to 1-5 and Comparative Examples 1-1 to 1-4 were each measured for the weight reduction rates ($\Delta W_{220}$, $\Delta W_{240}$, and $\Delta W_{180}$) using a thermogravimetric analyzer (TGA 550, manufacturer: TA Instruments) according to the following Equation 1. Here, $\Delta W_T$ refers to the weight reduction rate (%) at a specific temperature (T°C) condition.

$$[\text{Equation 1}]$$

$$\text{Weight reduction rate } (\Delta W_T) = \frac{W - W_T}{W} \times 100$$

In Equation 1, W is the weight (mg) of the biodegradable polyester resin whose moisture content is adjusted to 100 ppm, and $W_T$ is the weight (mg) measured by a thermogravimetric analyzer after the biodegradable polyester resin whose moisture content has been adjusted is kept at T°C for 60 minutes.

**Test Example 1-4: Intrinsic viscosity (IV$_1$)**

2 g of each of the resin pellets prepared in Examples 1-1 to 1-5 and Comparative Examples 1-1 to 1-4 was completely dissolved in 25 ml of 2-chloroform. The relative viscosity of the sample was calculated according to the following Equation B by measuring the falling time of the sample using a BS-type NO$_2$ Ostwald viscosity tube. The relative viscosity value thus obtained was converted to intrinsic viscosity (IV, dl/g) using an automatic viscometer (product name: SS-600-L2, manufacturer: With Lab Co., Ltd.) according to the following Equation B.

[Equation B]

$$Relative \; viscosity = \frac{B \times t_1 - \dfrac{2.4}{t_1}}{B \times t_0 - \dfrac{2.4}{t_0}}$$

In Equation B, B is the correction factor of the viscosity tube, $t_0$ is the falling time (second) measured using 25 ml of 2-chloroform alone, and ti is the falling time (second) measured using 2 g of a resin pellet dissolved in 25 ml of 2-chloroform.

[Table 1]

| | | Ex. 1-1 | Ex. 1-2 | Ex. 1-3 | Ex. 1-4 | Ex. 1-5 |
|---|---|---|---|---|---|---|
| Diol (% by mole) | | 1,4-BDO (100) | 1,4-BDO (100) | 1,4-BDO (100) | 1,4-BDO (100) | 1,4-BDO (100) |
| Dicarboxylic acid (% by mole) | | TPA (52) AA (48) | TPA (53) AA (47) | TPA (50) AA (50) | TPA (50) AA (50) | TPA (50) AA (50) |
| Nanocellulose (ppm) | | CNC (1,000) | CNF (500) | CNC (700) | - | CNC (1,000) |
| First polycondensation | Temp. (°C) | 240 | 245 | 235 | 235 | 240 |
| | Pressure (Torr) | 50 | 30 | 40 | 80 | 100 |
| Second polycondensation | Temp. (°C) | 240 | 240 | 245 | 235 | 245 |
| | Pressure (Torr) | 0.5 | 0.5 | 0.5 | 0.5 | 0.5 |
| Number of first repeat unit (X) | | 312 | 286 | 275 | 250 | 275 |
| Number of second repeat unit (Y) | | 288 | 314 | 275 | 250 | 275 |
| X/Y | | 1.08 | 0.91 | 1.00 | 1.00 | 1.00 |
| Polydispersity index (PDI) | | 1.6 | 1.7 | 1.8 | 1.9 | 1.7 |
| Number of carboxyl end groups (eq/ton) | | 40.0 | 39.0 | 42.0 | 29.8 | 35 |
| $\Delta W_{220}$ (%) | | 0.50 | 0.60 | 0.80 | 0.90 | 0.55 |
| $\Delta W_{240}$ (%) | | 0.60 | 0.75 | 0.92 | 1.05 | 0.63 |
| $\Delta W_{180}$ (%) | | 0.20 | 0.25 | 0.22 | 0.10 | 0.20 |
| $\|\Delta W_{240} - \Delta W_{180}\|$ (%) | | 0.40 | 0.50 | 0.70 | 0.95 | 0.43 |
| Intrinsic viscosity (IV$_1$, dl/g) | | 1.50 | 1.48 | 1.46 | 1.43 | 1.46 |

[Table 2]

| | | C. Ex. 1-1 | C. Ex. 1-2 | C. Ex. 1-3 | C. Ex. 1-4 |
|---|---|---|---|---|---|
| Diol (% by mole) | | 1,4-BDO (100) | 1,4-BDO (100) | 1,4-BDO (100) | 1,4-BDO (100) |
| Dicarboxylic acid (% by mole) | | TPA (50) AA (50) | TPA (48) AA (52) | SA (100) | TPA (50) AA (50) |
| Nanocellulose (ppm) | | - | - | - | - |
| First polycondensation | Temp. (°C) | 265 | 260 | 265 | 265 |
| | Pressure (Torr) | 150 | 300 | 400 | 0.3 |
| Second polycondensation | Temp. (°C) | 265 | 260 | 265 | 265 |
| | Pressure (Torr) | 0.5 | 0.5 | 1.0 | 1.0 |
| Number of first repeat unit (X) | | 190 | 336 | 190 (Homopolymer) | 140 |
| Number of second repeat unit (Y) | | 190 | 364 | | 140 |
| X/Y | | 1.00 | 0.92 | - | 1.00 |
| Polydispersity index (PDI) | | 2.3 | 1.9 | 2.5 | 2.1 |
| Carboxyl end groups Number of (eq/ton) | | 27.0 | 51.0 | 60.0 | 55.0 |
| $\Delta W_{220}$ (%) | | 1.50 | 1.80 | 2.00 | 2.50 |
| $\Delta W_{240}$ (%) | | 2.13 | 2.21 | 2.52 | 3.40 |
| $\Delta W_{180}$ (%) | | 0.33 | 0.31 | 0.32 | 0.35 |
| $|\Delta W_{240} - \Delta W_{180}|$ (%) | | 1.80 | 1.90 | 2.20 | 3.05 |
| Intrinsic viscosity ($IV_1$, dl/g) | | 1.10 | 1.35 | 1.28 | 0.87 |

As can be seen from Tables 1 and 2 above, the biodegradable polyester resins of Examples 1-1 to 1-5 showed excellent results, as compared with the resins of Comparative Examples 1-1 to 1-3, in terms of all of the polydispersity index, number of carboxyl end groups, weight reduction rate, and intrinsic viscosity.

Specifically, as the biodegradable polyester resins of Examples 1-1 to 1-5 were prepared through a pretreatment step and first and second polycondensation reactions under specific conditions, the polydispersity index and the number of carboxyl end groups were appropriately controlled, whereby they had enhanced characteristics of weight reduction rate and intrinsic viscosity, resulting in excellent mechanical properties.

In contrast, in the resins of Comparative Examples 1-1 to 1-4, the polydispersity index and the number of carboxyl end groups were outside the appropriate numerical ranges. Since they had a very high weight reduction rate, they had very low mechanical properties.

**Preparation of a biodegradable polyester film**

**Example 2-1**

10 ppm of calcium acetate as an electrostatic agent was added to the resin pellets prepared in Example 1-1, which were compounded at 180°C, melt-extruded at 240°C using a T-die, and subjected to electrostatic application, to thereby prepare a biodegradable polyester film having a thickness of 400 μm.

**Example 2-2**

50 ppm of spherical silica was added to the resin pellets prepared in Example 1-2, which were compounded at 180°C and subjected to blow molding at 240°C using blowing equipment (trade name: YJF-ΨSO-800L, manufacturer: Yujin Engineering), to thereby prepare a biodegradable polyester film having a thickness of 100 μm.

### Example 2-3

A biodegradable polyester film having a thickness of 100 $\mu$m was prepared in the same manner as in Example 2-2, except that the biodegradable polyester resin pellets of Examples 1-3 were used instead of the resin pellets of Examples 1-2 and that 200 ppm of spherical silica was added.

### Example 2-4

200 ppm of calcium carbonate was added to the resin pellets prepared in Example 1-4, which were compounded at 180°C and molded at 240°C using an injection molding machine (trade name: EDIS 250, Manufacturer: Hyundai Platech), to thereby prepare a biodegradable polyester film having a thickness of 400 $\mu$m.

### Example 2-5

10 ppm of calcium acetate as an electrostatic agent was added to the resin pellets prepared in Example 1-5, which were compounded at 180°C, melt-extruded at 240°C using a T-die, and subjected to electrostatic application, to thereby prepare a biodegradable polyester film having a thickness of 400 $\mu$m.

### Comparative Example 2-1

10 ppm of magnesium acetate as an electrostatic agent was added to the resin pellets prepared in Comparative Example 1-1, which were compounded at 200°C, melt-extruded at 240°C using a T-die, and subjected to electrostatic application, to thereby prepare a biodegradable polyester film having a thickness of 400 $\mu$m.

### Comparative Example 2-2

A biodegradable polyester film having a thickness of 100 $\mu$m was prepared in the same manner as in Example 2-2, except that the biodegradable polyester resin pellets of Comparative Examples 1-2 were used instead of the resin pellets of Examples 1-2 and that 200 ppm of spherical silica was added.

### Comparative Example 2-3

200 ppm of calcium carbonate was added to the resin pellets prepared in Comparative Example 1-3, which were compounded at 220°C and molded at 240°C using an injection molding machine (trade name: EDIS 250, Manufacturer: Hyundai Platech), to thereby prepare a biodegradable polyester film having a thickness of 400 $\mu$m.

### Comparative Example 2-4

10 ppm of calcium acetate as an electrostatic agent was added to the resin pellets prepared in Comparative Example 1-4, which were compounded at 200°C, melt-extruded at 240°C using a T-die, and subjected to electrostatic application, to thereby prepare a biodegradable polyester film having a thickness of 400 $\mu$m.

### [Test Example]

### Test Example 2-1: Tensile strength

The films prepared in Examples 2-1 to 2-5 and Comparative Examples 2-1 to 2-4 were each prepared to a specimen in accordance with ASTM D638 V-type. The tensile strength (MPa) was measured using INSTRON's universal testing machine (UTM, model name 4206-001) at a tensile speed of 100 mm/minute and calculated by the program built in the equipment.

### Test Example 2: Impact absorption energy

The films prepared in Examples 2-1 to 2-5 and Comparative Examples 2-1 to 2-4 were each measured for the impact absorption energy using a film impact test of Toyoseki.
Specifically, the film was cut to a width of 10 cm and a length of 10 cm. This film was hit with the head of a triangular pyramid having a diameter of 16 mm and a height of 14 mm to measure the amount of energy absorbed (KJ). This value was divided by the thickness (m) to calculate impact absorption energy (KJ/m). Here, the thickness of the

film ($\mu$m) was converted into meters, and the average value of the amounts of impact absorption energy obtained by tests of 10 times for each film was calculated.

**Test Example 2-3: Processability**

The films prepared in Examples 2-1 to 2-5 and Comparative Examples 2-1 to 2-4 were each evaluated for the processability depending on the presence of defects such as fumes, air bubbles or bubbles, and fisheyes in the manufacturing process, as follows. Here, the formation of bubbles was observed by blowing air from below during the manufacturing process.

o: No fumes, air bubbles, and fisheyes were observed. A bubble was in a good shape while it was neither stretched to one side to be oblique nor burst, and the resin was not stuck to the roll.
△: Some fumes, air bubbles, or fisheyes were observed. A bubble was slightly stretched to one side to be oblique, but was not burst, and the resin was slightly stuck to the roll.
×: A lot of fumes, air bubbles, or fisheyes were observed. A bubble was stretched to one side to be in an incomplete shape or burst, and a lot of the resin was stuck to the roll.

**Test Example 2-4: Intrinsic viscosity ($IV_2$)**

The intrinsic viscosity ($IV_2$) of each of the films prepared in Examples 2-1 to 2-5 and Comparative Examples 2-1 to 2-4 was measured in the same manner as in Test Example 1-4.
In addition, the absolute value of the difference between the intrinsic viscosity ($IV_1$) of the biodegradable polyester resin in Test Examples 1-4 and the intrinsic viscosity ($IV_2$) of the film was calculated.

**Test Example 2-5: Biodegradability**

The films prepared in Examples 2-1 to 2-5 and Comparative Examples 2-1 to 2-4 were each measured for the biodegradability by measuring the amount of carbon dioxide generated according to KS M3100-1. Specifically, an inoculum container having compost only manufactured in a compost factory was prepared. A test container in which a film in 5% by weight of the dry weight of the compost had been added was prepared. Thereafter, they were cultivated for 180 days under the conditions of a temperature of 58 $\pm$ 2°C, a moisture content of 50%, and an oxygen concentration of 6% or more. Carbon dioxide generated in each container was collected and titrated with an aqueous solution of phenolphthalein to measure the amount of carbon dioxide generated. The biodegradability was calculated from the measured amount of generated carbon dioxide according to the following Equation C.

[Equation C]

Biodegradability (%) = {(amount of $CO_2$ generated in a test container) – (amount of $CO_2$ generated in an inoculum container) $\times$ 100/(theoretical amount of $CO_2$ generated in a test container)

[Table 3]

|  | Ex. 2-1 | Ex. 2-2 | Ex. 2-3 | Ex. 2-4 | Ex. 2-5 |
|---|---|---|---|---|---|
| Tensile strength (MPa) | 42 | 40 | 38 | 36 | 41 |
| Impact absorption energy (KJ/m) | 6.5 | 6.0 | 5.8 | 5.5 | 6.3 |
| Processability | ○ | ○ | ○ | ○ | ○ |
| Intrinsic viscosity ($IV_1$, dl/g) | 1.50 | 1.48 | 1.46 | 1.43 | 1.46 |
| Intrinsic viscosity ($IV_2$, dl/g) | 1.45 | 1.38 | 1.33 | 1.25 | 1.39 |
| $|IV_1 - IV_2|$ | 0.05 | 0.10 | 0.13 | 0.18 | 0.07 |
| Biodegradability (%) | 93% | 95% | 95% | 91% | 96% |

[Table 4]

|  | C. Ex. 2-1 | C. Ex. 2-2 | C. Ex. 2-3 | C. Ex. 2-4 |
|---|---|---|---|---|
| Tensile strength (MPa) | 26 | 29 | 25 | 22 |
| Impact absorption energy (KJ/$\mu$m) | 4.5 | 4.9 | 4.3 | 3.8 |
| Processability | × | Δ | Δ | × |
| Intrinsic viscosity (IV$_1$, dl/g) | 1.10 | 1.35 | 1.28 | 0.87 |
| Intrinsic viscosity (IV$_2$, dl/g) | 0.88 | 1.10 | 1.00 | 0.53 |
| $\lvert IV_1 - IV_2 \rvert$ | 0.22 | 0.25 | 0.28 | 0.34 |
| Biodegradability (%) | 91% | 92% | 93% | 91% |

As can be seen from Tables 3 and 4 above, the biodegradable polyester films of Examples 2-1 to 2-5 were superior to the films of Comparative Examples 2-1 to 2-4 in all the characteristics of tensile strength, impact absorption energy, processability, intrinsic viscosity, and biodegradability.

Specifically, as the biodegradable polyester films of Examples 2-1 to 2-5 comprise the biodegradable polyester resins of Examples 1-1 to 1-5, respectively, they were excellent in mechanical properties such as tensile strength and impact absorption energy, as well as biodegradability, along with a small change in intrinsic viscosity (IV drop) and a low amount of oligomers, whereby defects such as fumes, air bubbles, and fisheyes were hardly observed. In particular, the biodegradable polyester films of Examples 2-1 to 2-5 had high injection moldability and bubble stability in the manufacturing process, along with low pinning properties, resulting in excellent productivity.

In contrast, as the biodegradable polyester films of Comparative Examples 2-1 to 2-4 comprised the biodegradable polyester resins of Comparative Examples 1-1 to 1-4, respectively, they were poor in mechanical properties such as tensile strength and impact absorption energy, and defects such as fumes, air bubbles, and fisheyes were observed. The material containing the resin was stuck to the roll, resulting in very high pinning properties, and the bubble stability was low, showing the bursting of a bubble.

**Claims**

1.   A biodegradable polyester resin, which comprises a first repeat unit comprising a first diol residue and an aromatic dicarboxylic acid residue; and

a second repeat unit comprising a second diol residue and an aliphatic dicarboxylic acid residue, wherein the polydispersity index (PDI) is less than 2.0, and, when the weight reduction rate (%) at a specific temperature (T°C) condition according to the following Equation 1 is referred to as $\Delta W_T$, $\Delta W_{220}$ is 1.3% or less:

[Equation 1]

$$\text{Weight reduction rate } (\Delta W_T) = \frac{W - W_T}{W} \times 100$$

in Equation 1, W is the weight (mg) of the biodegradable polyester resin whose moisture content is adjusted to 100 ppm, and $W_T$ is the weight (mg) measured by a thermogravimetric analyzer after the biodegradable polyester resin whose moisture content has been adjusted to 100 ppm is kept at T°C for 60 minutes.

2.   The biodegradable polyester resin of claim 1, which satisfies the following Relationship 2:

[Relationship 2]

$$\lvert \Delta W_{240} - \Delta W_{180} \rvert \leq 1.5\%.$$

3.   The biodegradable polyester resin of claim 2, wherein $\Delta W_{240}$ is 0.1% to 2.0%, and $\Delta W_{180}$ is 0.05% to 0.3%.

4. The biodegradable polyester resin of any preceding claim, wherein the first diol residue and the second diol residue each comprise a residue of 1,4-butanediol, 1,2-ethanediol, 1,3-propanediol, or a derivative thereof,

   the aromatic dicarboxylic acid residue comprises a residue of terephthalic acid, dimethyl terephthalate, or a derivative thereof, and
   the aliphatic dicarboxylic acid residue comprises a residue of adipic acid, succinic acid, sebacic acid, or a derivative thereof.

5. The biodegradable polyester resin of claim 4, wherein the aromatic dicarboxylic acid comprises terephthalic acid, and the terephthalic acid has an average particle diameter (D50) of 10 $\mu$m to 400 $\mu$m in a particle size distribution (PSD) measured by a particle size analyzer Microtrac S3500 and a standard deviation of the average particle diameter (D50) of 100 or less, and
   the aliphatic dicarboxylic acid comprises adipic acid, and the adipic acid has an average particle diameter (D50) of 50 $\mu$m to 500 $\mu$m in a particle size distribution (PSD) measured with a particle size analyzer Microtrac S3500 and a standard deviation of the average particle diameter (D50) of 100 or less.

6. The biodegradable polyester resin of any preceding claim, wherein the ratio (X/Y) of the number of the first repeat unit (X) to the number of the second repeat unit (Y) is 0.8 to 3.0, and the biodegradable polyester resin has a number of carboxyl end groups of 50 eq/ton or less.

7. The biodegradable polyester resin of any preceding claim, wherein the biodegradable polyester resin comprises the first repeat unit and the second repeat unit in the form of a block copolymer.

8. The biodegradable polyester resin of any preceding claim, wherein the biodegradable polyester resin comprises at least one nanocellulose selected from the group consisting of cellulose nanocrystals, cellulose nanofibers, and microfibrillated cellulose, and
   the nanocellulose has an average particle size of 100 nm or more and a particle size deviation of 32% or less.

9. A process for preparing a biodegradable polyester resin, which comprises:

   pretreating a mixture of a diol and a dicarboxylic acid to prepare a slurry;
   subjecting the slurry to an esterification reaction to prepare a prepolymer; and
   subjecting the prepolymer to a polycondensation reaction to prepare a polymer,
   wherein the biodegradable polyester resin comprises a first repeat unit comprising a first diol residue and an aromatic dicarboxylic acid residue; and a second repeat unit comprising a second diol residue and an aliphatic dicarboxylic acid residue,
   the polydispersity index (PDI) of the biodegradable polyester resin is less than 2.0, and, when the weight reduction rate (%) at a specific temperature (T°C) condition according to the following Equation 1 is referred to as $\Delta W_T$, $\Delta W_{220}$ of the biodegradable polyester resin is 1.3% or less:

[Equation 1]

$$\text{Weight reduction rate } (\Delta W_T) = \frac{W - W_T}{W} \times 100$$

   in Equation 1, W is the weight (mg) of the biodegradable polyester resin whose moisture content is adjusted to 100 ppm, and $W_T$ is the weight (mg) measured by a thermogravimetric analyzer after the biodegradable polyester resin whose moisture content has been adjusted is kept at T°C for 60 minutes.

10. The process for preparing a biodegradable polyester resin of claim 9, wherein the step of preparing a slurry is carried out by agitating a mixture of the diol and the dicarboxylic acid at 25°C to 85°C and 50 rpm to 200 rpm for 10 minutes or longer.

11. The process for preparing a biodegradable polyester resin of claim 9 or 10, wherein the step of preparing a slurry comprises:

   pretreating a mixture of the first diol and the aromatic dicarboxylic acid to prepare a first slurry; and

pretreating a mixture of the second diol and the aliphatic dicarboxylic acid to prepare a second slurry.

12. The process for preparing a biodegradable polyester resin of claim 11, wherein the step of preparing a prepolymer comprises:

subjecting the first slurry to a first esterification reaction at 190°C to 260°C; and
adding the second slurry to the first esterification reaction product and subjecting them to a second esterification reaction at 160°C to 240°C.

13. The process for preparing a biodegradable polyester resin of any of claims 9 to 12, wherein the step of preparing a polymer comprises:

subjecting the prepolymer to a first polycondensation reaction at a temperature of 255°C or lower and a pressure of 1 Torr to 100 Torr for 0.5 to 3 hours; and
subjecting the first polycondensation reaction product to a second polycondensation reaction at a temperature of 210°C to 250°C, while the pressure is reduced to 1 Torr, for 0.5 hour or longer.

14. A biodegradable polyester film, which comprises a biodegradable polyester resin,

wherein the biodegradable polyester resin comprises a first repeat unit comprising a first diol residue and an aromatic dicarboxylic acid residue; and a second repeat unit comprising a second diol residue and an aliphatic dicarboxylic acid residue,
the polydispersity index (PDI) of the biodegradable polyester resin is less than 2.0, and, when the weight reduction rate (%) at a specific temperature (T°C) condition according to the folowing Equation 1 is referred to as $\Delta W_T$, $\Delta W_{220}$ of the biodegradable polyester resin is 1.3% or less:

[Equation 1]

$$\text{Weight reduction rate } (\Delta W_T) = \frac{W - W_T}{W} \times 100$$

in Equation 1, W is the weight (mg) of the biodegradable polyester resin whose moisture content is adjusted to 100 ppm, and $W_T$ is the weight (mg) measured by a thermogravimetric analyzer after the biodegradable polyester resin whose moisture content has been adjusted is kept at T°C for 60 minutes.

15. The biodegradable polyester film of claim 15, wherein the biodegradable polyester film has a tensile strength of 30 MPa or more and an impact absorption energy of 5.0 KJ/m or more, and

the biodegradable polyester film satisfies the following Equation 3:

[Equation 3]

$$| IV_1 - IV_2 | \leq 0.2$$

in Equation 3, $IV_i$ is the intrinsic viscosity (dl/g) of the biodegradable polyester resin, and $IV_2$ is the intrinsic viscosity (dl/g) of the biodegradable polyester film.

Europäisches
Patentamt

European
Patent Office

Office européen
des brevets

# EUROPEAN SEARCH REPORT

Application Number

EP 23 17 4827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 095 180 A1 (ECOVANCE CO LTD [KR]) 30 November 2022 (2022-11-30) | 1-4, 6-12,14, 15 | INV. C08G63/183 C08G63/78 |
| A,P | * paragraph [0122] – paragraph [0170]; examples 1, 2; tables 1, 2 * ----- | 5,13 | C08J5/18 C08L67/02 C08G63/16 |
| X,P | EP 4 095 179 A1 (ECOVANCE CO LTD [KR]) 30 November 2022 (2022-11-30) | 1-4, 6-12,14, 15 | |
| A,P | * paragraph [0112] – paragraph [0160]; examples 1, 2; tables 1, 2 * ----- | 5,13 | |
| X | EP 3 916 036 A1 (SKC CO LTD [KR]) 1 December 2021 (2021-12-01) | 1-4, 6-12,14, 15 | |
| A | * examples C1-1, C1-2, D1-1, D1-2; tables 3, 4 * ----- | 5,13 | |
| X | US 2015/307657 A1 (KANG GYUNG DON [KR] ET AL) 29 October 2015 (2015-10-29) | 1-4,6,7, 9,10,14, 15 | |
| A | * paragraph [0109] – paragraph [0172]; examples 1, 2; table 1 * ----- | 5,8, 11-13 | TECHNICAL FIELDS SEARCHED (IPC) C08G C08J C08L |

The present search report has been drawn up for all claims

| Place of search | Date of completion of the search | Examiner |
|---|---|---|
| The Hague | 18 October 2023 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 4827

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2023

| Patent document cited in search report | | | Publication date | Patent family member(s) | | | Publication date |
|---|---|---|---|---|---|---|---|
| EP 4095180 | A1 | | 30-11-2022 | CN | 115386072 | A | 25-11-2022 |
| | | | | EP | 4095180 | A1 | 30-11-2022 |
| | | | | JP | 7291268 | B2 | 14-06-2023 |
| | | | | JP | 2022181205 | A | 07-12-2022 |
| | | | | JP | 2023058640 | A | 25-04-2023 |
| | | | | KR | 102431671 | B1 | 12-08-2022 |
| | | | | KR | 20220159255 | A | 02-12-2022 |
| | | | | KR | 20230058600 | A | 03-05-2023 |
| | | | | TW | 202246381 | A | 01-12-2022 |
| | | | | US | 2022389154 | A1 | 08-12-2022 |
| | | | | US | 2023257516 | A1 | 17-08-2023 |
| EP 4095179 | A1 | | 30-11-2022 | CN | 115386073 | A | 25-11-2022 |
| | | | | EP | 4095179 | A1 | 30-11-2022 |
| | | | | JP | 2022181209 | A | 07-12-2022 |
| | | | | KR | 102421030 | B1 | 14-07-2022 |
| | | | | TW | 202246380 | A | 01-12-2022 |
| | | | | US | 2022389215 | A1 | 08-12-2022 |
| EP 3916036 | A1 | | 01-12-2021 | CN | 113736069 | A | 03-12-2021 |
| | | | | EP | 3916036 | A1 | 01-12-2021 |
| | | | | JP | 7282124 | B2 | 26-05-2023 |
| | | | | JP | 2021188038 | A | 13-12-2021 |
| | | | | US | 2021380757 | A1 | 09-12-2021 |
| | | | | WO | 2021241931 | A1 | 02-12-2021 |
| US 2015307657 | A1 | | 29-10-2015 | CN | 104854163 | A | 19-08-2015 |
| | | | | DE | 112013005929 | T5 | 10-09-2015 |
| | | | | JP | 2016500392 | A | 12-01-2016 |
| | | | | KR | 20140076355 | A | 20-06-2014 |
| | | | | TW | 201422663 | A | 16-06-2014 |
| | | | | US | 2015307657 | A1 | 29-10-2015 |
| | | | | WO | 2014092276 | A1 | 19-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120103158